# EUROPÄISCHE PATENTSCHRIFT

(11) **EP 3 189 311 B1**
(45) Veröffentlichungstag und Bekanntmachung des Hinweises auf die Patenterteilung: **11.03.2020**
(21) Anmeldenummer: 15760104.8
(22) Anmeldetag: 19.08.2015
(51) Int. Cl.: G01F 1/32, G01F 15/16

(54) **SENSORBAUGRUPPE FÜR EINEN SENSOR, SENSOR SOWIE DAMIT GEBILDETES MESSSYSTEM**
SENSOR ASSEMBLY FOR A SENSOR, SENSOR AND ACCORDING MEASUREMENT SYSTEM
MODULE DE CAPTEUR, CAPTEUR ET SYSTÈME DE MESURE CORRESPONDANT

(30) Priorität: 01.09.2014 DE 102014112558
(43) Veröffentlichungstag der Anmeldung: 12.07.2017
(73) Patentinhaber: Endress+Hauser Flowtec AG, 4153 Reinach (CH)
(72) Erfinder: LAIS, Christian, 79356 Eichstetten (DE); STRUB, Andreas, D-79576 Weil am Rhein (CH); WIEDERKEHR, Dominique, F-68220 Hagenthal-le-bas (FR)
(74) Vertreter: Andres, Angelika Maria
(86) Internationale Anmeldenummer: PCT/EP2015/069046
(87) Internationale Veröffentlichungsnummer: WO 2016/034417

(56) Entgegenhaltungen:
- EP-A1- 0 841 545
- WO-A1-00/09973
- WO-A1-89/02580
- WO-A1-94/08211
- DE-A1-102008 054 915
- US-A1- 2006 230 841
- US-A1- 2011 154 913

## Beschreibung

Die Erfindung betrifft eine Sensorbaugruppe mit einer Membran sowie eine sich ausgehend von einer Oberfläche der Membran erstreckende Sensorfahne. Ferner betrifft die Erfindung einen mittels einer solchen Sensorbaugruppe gebildeten Sensor bzw. damit gebildetes Meßsystem bzw. dessen Verwendung zum Erfassen von Druckschwankungen in einem strömenden Fluid.

In der Prozeßmeß- und Automatisierungstechnik werden für die Messung von Strömungsgeschwindigkeiten von in Rohrleitungen strömenden Fluiden, insb. schnellströmenden und/oder heißen Gasen und/oder Fluidströmen von hoher Reynoldszahl (Re), bzw. von mit einer jeweiligen Strömungsgeschwindigkeit (u) korrespondierenden Volumen- oder Massen-Durchflußraten oftmals als Vortex-Durchflußmeßgeräte ausgebildete Meßsysteme verwendet. Beispiele für solche, Meßsysteme sind u.a. aus der der US-A 2006/0230841, der US-A 2008/0072686, der US-A 2011/0154913, der US-A 2011/0247430, der US-A 60 03 384, der US-A 61 01 885, der US-B 63 52 000, der US-B 69 10 387 oder der US-B 69 38 496 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200" (http://www.de.endress.com/#products/prowirl). Des Weiteren offenbart die WO 94/08211 A1 eine Sensorbaugruppe gemäß dem Oberbegriff des vorliegenden Patentanspruchs 1.

Die gezeigten Meßsysteme weisen jeweils einen in das Lumen der jeweiligen, beispielsweise nämlich als Anlagenkomponente eines Wärmeversorgungsnetzes oder eines Turbinenkreislaufes ausgebildeten, Rohrleitung bzw. in ein Lumen eines in den Verlauf nämlicher Rohrleitung eingesetzten Meßrohrs hineinragenden, mithin vom Fluid angeströmten Staukörper zum Erzeugen von zu einer sogenannten *Kármánschen* Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit abhängigen Ablöserate (1/f_{Vtx}) am Staukörper generiert. Ferner weisen die Meßsysteme einen in den Staukörper integrierten bzw. mit diesem verbundenen oder stromabwärts desselben, nämlich im Bereich der *Karman'schen* Wirbelstrasse in die Strömung, mithin in Lumen der hineinragenden Sensor auf, der dazu dient Druckschwankungen in der im strömenden Fluid ausgebildeten *Kármánschen* Wirbelstrasse zu erfassen und in ein die Druckschwankungen repräsentierendes Sensorsignal zu wandeln, nämlich ein - beispielsweise elektrisches oder optisches - Signal zu liefern, das mit einem innerhalb des Fluids herrschenden, infolge gegenläufiger Wirbel stromab des Staukörpers periodischen Schwankungen unterworfenen Druck korrespondiert bzw. das eine mit der Ablöserate der Wirbel korrespondierende Signalfrequenz (∼f_{Vtx}) aufweist.

Der Sensor weist dafür eine mittels einer dünnen und im wesentlichen flachen Membran sowie einer sich ausgehend von einer im wesentlichen planaren Oberfläche der Membran erstreckenden - zumeist stabförmigen, plattenförmigen oder keilförmigen - Sensorfahne gebildete Sensorbaugruppe auf, die dafür eingerichtet ist, Druckschwankungen in der *Kármánschen* Wirbelstrasse zu erfassen, nämlich in mit den Druckschwankungen korrespondierende Bewegungen der Membran zu wandeln. Die Membran weist ein - zumeist kreisringförmiges - äußeres Randsegment auf, das dafür eingerichtet ist, mit einer dem Haltern der Membran an einer Wandung eines Rohrs dienenden Fassung hermetisch dicht, beispielsweise nämlich stoffschlüssige, verbunden zu werden, derart, daß die Membran eine in der Wandung des Rohrs vorgesehene Öffnung überdeckt bzw. hermetisch verschließt und daß die die Sensorfahne tragende Oberfläche der Membran dem Fluid führenden Lumen des Meßrohrs bzw. der Rohrleitung zugewandt ist, mithin die Sensorfahne in nämliches Lumen hineinragt. Die Membran ist so geformt, daß zumindest eine Membran-Dicke, gemessen als eine minimale Dicke eines durch das äußere Randsegment begrenzten inneren Membransegment, sehr viel kleiner als ein Membran-Durchmesser, gemessen als ein größter Durchmesser einer durch das äußere Randsegment begrenzten Fläche ist. Um eine möglichst hohe Meßemepfindlichkeit, nämliche eine möglichst hohe Empfindlichkeit des Sensors auf die zu erfassenden Druckschwankungen und zugleich eine möglichst hohe, nämlich oberhalb der höchsten zu messenden Ablöserate liegende mechanische Eigenfrequenz für den durch die Druckschwankungen erzwungenen Biegeschwingungsmode der Sensorbaugruppe zu erzielen, weisen Membranen etablierter Meßsysteme typischerweise ein Durchmesser-zu-Dicke-Verhältnis auf, das etwa in der Größenordnung von 20:1 liegt. Wie u.a. in der eingangs erwähnten US-B 63 52 000 gezeigt, können Sensorbaugruppen der vorbezeichneten Art gelegentlich zudem einen sich ausgehend von einer der die Sensorfahne tragende Oberfläche abgewandten Oberfläche der Membran erstreckenden, zumeist stab-, platten- oder hülsenförmig ausgebildeten Ausgleichskörper aufweisen, der im besonderen dazu dient, aus Bewegungen der Sensorbaugruppe resultierenden Kräften bzw. Momenten, beispielsweise infolge von Vibrationen der Rohrleitung, zu kompensieren bzw. daraus resultierende unerwünschte Bewegungen der Sensorfahne zu vermeiden.

Zwecks des Generierens des Sensorsignals umfaßt der Sensor ferner ein entsprechendes, beispielsweise nämlich mittels eines mit der Sensorbaugruppe mechanisch gekoppelten bzw. darin integrierten Kondensator oder mittels eines als piezoelektrischer Wandler dienenden Piezostapel gebildetes, Wandelerelement, das typischerweise dafür eingerichtet ist, Bewegungen der Membran bzw. des ggf. vorhandenen Ausgleichskörper zu erfassen und einem elektrischen oder optischen Trägersignal auf zu modulieren.

Die Sensorbaugruppe bzw. der damit gebildete Sensor ist auf einer dem Fluid führenden Lumen abgewandten Seite ferner mit einer - typischerweise druck- und schlagfest gekapselten, ggf. auch nach außen hin hermetisch abgedichteten - Umformer-Elektronik verbunden. Umformer-Elektronik industrietauglichen Meßsysteme weisen üblicherweise eine entsprechende, mit dem Wandlerelement via Anschlußleitungen, ggf. unter Zwischenschaltung elektrischer Barrieren und/oder galvanischer Trennstellen, elektrisch verbundene digitale Meßschaltung zum Verarbeiten des wenigstens einen vom Wandlerelement erzeugten Sensorsignals und zum Erzeugen von digitalen Meßwerten für die jeweils zu erfassende Meßgröße, nämlich die Strömungsgeschwindigkeit, die Volumen-Durchflußrate und/oder die Massen-Durchflußrate, auf. Die üblicherweise in einem Schutz-Gehäuse aus Metall und/oder schlagfestem Kunststoff untergebrachte Umformer-Elektronik industrietauglicher bzw. in der industriellen Meßtechnik etablierter Meßsysteme stellen zudem zumeist auch einem Industriestandard, beispielsweise der DIN IEC 60381-1, konforme externe Schnittstellen für die Kommunikation mit übergeordneten, beispielsweise mittels Speicherprogrammierten Steuerungen (SPS) gebildete, Meß- und/oder Reglersysteme bereit. Ein solche externe Schnittstelle kann beispielsweise als in eine Stromschleife eingliederbarer Zweileiter-Anschluß ausgebildete und/oder mit etablierten industriellen Feldbussen kompatible ausgebildet sein.

Nicht zuletzt aufgrund des meßprinzipbedingt relativ hohen Durchmesser-zu-Dicke-Verhältnisse der Membran weisen konventionelle Sensoren der in Rede stehenden Art - selbst bei Verwendung einer hochfesten Nickelbasislegierung, wie z.B. Inconel 718 (Special Metals Corp.), als Membranmaterial - zumeist eine Druckfestigkeit, nämlich einen maximal zulässiger Betriebsdruck, oberhalb dem eine nicht reversible plastische Verformung des Sensors oder gar ein Bersten der Membran zu besorgen ist, auf, die für in bestimmten Anwendungen gelegentlich tatsächlich auftretende extrem hohe Drücke bzw. Druckstöße zu niedrig sein kann, bzw. weisen solche Sensoren eine für solche Anwendungen zu ungünstige Abhängigkeit nämlicher Druckfestigkeit von der Betriebstemperatur (Druck-Temperatur-Kurve) auf, derart, daß beispielsweise für in eigentlich prädestinierten Heißdampfanwendungen mit Dampftemperaturen von über 400 C gelegentlich, beispielsweise infolge sogenannter kondensationsinduzierte Wasserschlägen (*CIWH* - *condensation induced water hammers*), auftretende Betriebsdrücken oberhalb von 140 bar ein zerstörungsfreies Widerstehen nicht mehr garantiert werden kann bzw. eine Verwendung eines konventionellen Meßsystems der in Rede stehenden Art aufgrund einschlägiger Rechtsvorschriften, wie z.B. Richtlinie 97/23/EG, 14. ProdSV, ASUE U-Stamp oder andere Druckgeräterichtlinien, nicht zulässig ist.

Ausgehend davon besteht eine Aufgabe der Erfindung darin, den Aufbau von Sensorbaugruppen der in Rede stehenden Art bzw. damit gebildeten Sensoren dahingehend zu verbessern, daß im Ergebnis ein höhere Druckfestigkeit bzw. eine auch den Einsatz in Heißdampfanwendungen mit Dampftemperaturen von über 400 C und Druckspitzen von über 140 bar ermöglichende Abhängigkeit der Druckfestigkeit von der Betriebstemperatur aufweisen.

Zur Lösung der Aufgabe besteht die Erfindung in einer Sensorbaugruppe gemäß dem vorliegenden Patentanspruch 1.

Darüberhinaus besteht die Erfindung in einem Sensor zum Erfassen von Druckschwankungen gemäß dem vorliegenden Patentanspruch 11.

Ferner besteht die Erfindung in einem Meßsystem gemäß dem vorliegenden Patentanspruch 12.

Ein weiter Aspekt der Erfindung besteht darin, ein vorbezeichnetes Meßsystem zum Messen eines Strömungsparameters - beispielsweise nämlich einer Strömungsgeschwindigkeit und/oder einer Volumendurchflußrate und/oder einer Massendurchflußrate - eines in einer Rohrleitung strömenden, beispielsweise eine Temperatur von mehr als 400°C und/oder mit einem Druck von mehr als 140 bar auf die Membran des Sensors wirkenden, Fluids, wie z.B. einem Dampf, zu verwenden.

Nach einer ersten Ausgestaltung der Sensorbaugruppe ist die Membran so geformt, daß der an die Sensorfahne angrenzende Bereich der ersten Oberfläche asphärisch ist.

Nach einer zweiten Ausgestaltung der Sensorbaugruppe ist die Membran so geformt, daß der an die Sensorfahne angrenzende Bereich der ersten Oberfläche bezüglich wenigstens einer gedachten Symmetrieachse achsensymmetrisch ist, beispielsweise derart, daß nämliche Symmetrieachse zu einer Trägheitshauptachse der Sensorfahne parallel verläuft und/oder derart, daß nämliche Symmetrieachse zu einer Trägheitshauptachse der Sensorfahne senkrecht ist.

Nach einer dritten Ausgestaltung der Sensorbaugruppe ist die Membran so geformt, daß der an die Sensorfahne angrenzende Bereich der ersten Oberfläche bezüglich genau zweier aufeinander senkrecht stehender gedachter Symmetrieachsen achsensymmetrisch ist, beispielsweise derart, daß zumindest eine der Symmetrieachsen zu einer Trägheitshauptachse der Sensorfahne parallel verläuft und/oder derart, daß eine Trägheitshauptachse der Sensorfahne zu einer der gedachten Symmetrieachsen senkrecht ist und zur anderen gedachten Symmetrieachse parallel verläuft.

Nach einer vierten Ausgestaltung der Sensorbaugruppe ist die Membran so geformt, daß der an die Sensorfahne angrenzende Bereich der ersten Oberfläche rotationssymmetrisch, beispielsweises nämlich sphärisch, ist.

Nach einer fünften Ausgestaltung der Sensorbaugruppe ist vorgesehen, daß ein die Sensorfahne tragendes Segment der Membran eine eine Mitte der Membran bildendende erste Zone mit einer ersten Dicke und eine an nämlich erste Zone angrenzende, beispielsweise nämliche erste Zone umschließende, zweite Zone mit einer von der ersten Dicke verschiedenen zweiten Dicke aufweist, etwa derart, daß die erste Dicke kleiner als die zweite Dicke ist.

Nach einer sechsten Ausgestaltung der Sensorbaugruppe ist die Membran so geformt, daß zumindest ein dem an die Sensorfahne angrenzenden Bereich der ersten Oberfläche gegenüberliegender Bereich der zweiten Oberfläche konkav ist.

Nach einer siebenten Ausgestaltung der Sensorbaugruppe ist die Membran so geformt, daß eine Membran-Höhe, gemessen als ein minimaler Abstand eines Flächenschwerpunkts der ersten Oberfläche bis zu einer durch einen umlaufenden äußeren Rand des an die Sensorfahne angrenzenden Bereichs der ersten Oberfläche einbeschriebenen gedachten Projektionsfläche kleiner als ein Membran-Durchmesser, gemessen als ein größter Durchmesser nämlicher Projektionsfläche, - beispielsweise kleiner als eine größte Halbachse bzw. ein Radius nämlicher Projektionsfläche - ist; dies beispielsweise auch derart, daß ein Durchmesser-zu- Höhe-Verhältnis der Membran, definiert als ein Verhältnis nämlichen Membran-Durchmessers zu nämlicher Membran-Höhe kleiner als 30 und/oder größer als 2, und/oder derart, daß ein Verhältnis nämlichen Membran-Durchmessers zu einer Länge der Sensorfahne, gemessen als minimaler Abstand zwischen einem proximalen, nämlich an die Membran grenzenden Ende der Sensorfahne bis zu einem distalen, nämlich von der Membran bzw. deren Oberfläche entfernten Ende der Sensorfahne, weniger als 2 und/oder mehr als 0,5 beträgt.

Nach einer achten Ausgestaltung der Sensorbaugruppe ist vorgesehen, daß die Membran zumindest teilweise konusförmig ist.

Nach einer neunten Ausgestaltung der Sensorbaugruppe ist die Membran so geformt, daß zumindest der an die Sensorfahne angrenzende Bereich der ersten Oberfläche, einer Oberfläche einer Kugelzone entspricht, beispielsweise nämlich derart, daß eine Deckfläche nämlicher Kugelzone mit einer Querschnittsfläche der Sensorfahne korrespondiert bzw. nämlicher Querschnittsfläche entspricht.

Nach einer zehnten Ausgestaltung der Sensorbaugruppe ist die Membran so geformt, daß zumindest der an die Sensorfahne angrenzende Bereich der ersten Oberfläche einer Mantelfläche eines Kegelstumpfs entspricht.

Nach einer elften Ausgestaltung der Sensorbaugruppe ist die Membran so geformt, daß zumindest der an die Sensorfahne angrenzende Bereich der ersten Oberfläche einem Segment einer Mantelfläche eines Ellipsoids entspricht.

Nach einer zwölften Ausgestaltung der Sensorbaugruppe ist vorgesehen, daß Sensorfahne und Membran so positioniert und zueinander ausgerichtet sind, daß eine Trägheitshauptachse der Sensorfahne zu einer Trägheitshauptachse der Sensorbaugruppe parallel verläuft oder damit koinzidiert.

Nach einer dreizehnten Ausgestaltung der Sensorbaugruppe ist vorgesehen, daß Sensorfahne und Membran so positioniert und zueinander ausgerichtet sind, daß eine Trägheitshauptachse der Membran in Verlängerung parallel zu einer Trägheitshauptachse der Sensorbaugruppe verläuft, beispielsweise nämlich damit koinzidiert.

Nach einer vierzehnten Ausgestaltung der Sensorbaugruppe ist vorgesehen, daß die Membran zumindest anteilig, beispielsweise auch überwiegend oder vollständig, aus einem Metall, wie z.B. einem Edelstahl bzw. einer Nickelbasislegierung, besteht.

Nach einer fünfzehnten Ausgestaltung der Sensorbaugruppe ist vorgesehen, daß die Sensorfahne zumindest anteilig, beispielsweise auch überwiegend oder vollständig, aus einem Metall, wie z.B. einem Edelstahl bzw. einer Nickelbasislegierung, besteht.

Nach einer sechzehnten Ausgestaltung der Sensorbaugruppe ist vorgesehen, daß Membran und Sensorfahne aus einem gleichen Material bestehen.

Nach einer siebzehnten Ausgestaltung der Sensorbaugruppe ist vorgesehen, daß Membran und Sensorfahne Bestandteile ein und desselben, beispielsweise gegossenen oder durch 3D-Laserschmelzen hergestellten, monolithischen Formteils sind.

Nach einer achtzehnten Ausgestaltung der Sensorbaugruppe ist vorgesehen, daß Membran und Sensorfahne stoffschlüssig miteinander verbunden, insb. nämlich miteinander verschweißt bzw. verlötet, sind.

Nach einer neunzehnten Ausgestaltung der Sensorbaugruppe weist die Membran ein, beispielsweise kreisringförmiges und/oder mit einer Dichtfläche versehenes, äußeres Randsegment auf. Diese Ausgestaltung der Erfindung weiterbildend ist das äußere Randsegment dafür eingerichtet, mit einer dem Haltern der Membran an einer Wandung eines Rohrs dienenden Fassung, beispielsweise stoffschlüssige und/oder hermetisch dicht, verbunden zu werden, etwa derart, daß die Membran eine in der Wandung des Rohrs vorgesehene Öffnung überdeckt, insb. nämlich hermetisch verschließt, und/oder derart, daß die erste Oberfläche der Membran einem Lumen des Rohrs zugewandt ist, mithin die Sensorfahne in nämliches Lumen hineinragt. Alternativ oder in Ergänzung kann in dem äußere Randsegment wenigstens eine, beispielsweise umlaufende und/oder kreisringartige, Dichtfläche ausgebildet sein und/oder kann das äußere Randsegment einen umlaufenden äußeren Rand des an die Sensorfahne angrenzenden konvexen Bereichs der ersten Oberfläche bilden.

Nach einer ersten Weiterbildung der Sensorbaugruppe umfaßt diese weiters: einen sich ausgehend von der zweiten Oberfläche der Membran erstreckenden, beispielsweise stabförmigen oder plattenförmigen oder hülsenförmigen, Ausgleichskörper zum Kompensieren von aus Bewegungen der Sensorbaugruppe resultierenden Kräften und/oder Momenten.

Nach einer ersten Ausgestaltung der ersten Weiterbildung Sensorbaugruppe ist vorgesehen, daß zumindest ein an den Ausgleichskörper angrenzender Bereich der zweiten Oberfläche konkav ist.

Nach einer zweiten Ausgestaltung der ersten Weiterbildung Sensorbaugruppe ist vorgesehen, daß Membran und Ausgleichskörper stoffschlüssig miteinander verbunden, beispielsweise nämlich miteinander verschweißt bzw. verlötet, sind.

Nach einer dritten Ausgestaltung der ersten Weiterbildung Sensorbaugruppe ist vorgesehen, daß Sensorfahne und Ausgleichskörper zueinander fluchtend angeordnet sind.

Nach einer vierten Ausgestaltung der ersten Weiterbildung Sensorbaugruppe ist die Membran so geformt, daß der an den Ausgleichskörper angrenzende Bereich der zweiten Oberfläche rotationssymmetrisch ist.

Nach einer fünften Ausgestaltung der ersten Weiterbildung Sensorbaugruppe sind der Ausgleichskörper und die Membran so positioniert und zueinander ausgerichtet, daß eine Trägheitshauptachse der Membran in Verlängerung parallel zu einer Trägheitshauptachse des Ausgleichskörpers verläuft, insb. nämlich damit koinzidiert.

Nach einer sechsten Ausgestaltung der ersten Weiterbildung Sensorbaugruppe ist vorgesehen, daß Sensorfahne, Ausgleichskörper und Membran so positioniert und zueinander ausgerichtet sind, daß eine Trägheitshauptachse der Sensorbaugruppe sowohl zu einer Trägheitshauptachse der Sensorfahne als auch zu einer Trägheitshauptachse des Ausgleichskörpers wie auch zu einer Trägheitshauptachse der Membran parallel verläuft bzw. nämliche Trägheitshauptachse der Sensorbaugruppe sowohl mit nämlicher Trägheitshauptachse der Sensorfahne als auch mit nämlicher Trägheitshauptachse des Ausgleichskörpers wie auch mit nämlicher Trägheitshauptachse der Membran koinzidiert.

Nach einer siebenten Ausgestaltung der ersten Weiterbildung Sensorbaugruppe ist vorgesehen, daß Membran und Ausgleichskörper Bestandteile ein und desselben monolithischen Formteils sind, beispielsweise derart, daß Sensorfahne, Membran und Ausgleichskörper Bestandteile nämlichen Formteils sind.

Nach einer achten Ausgestaltung der ersten Weiterbildung Sensorbaugruppe ist vorgesehen, daß der Ausgleichskörper zumindest anteilige, beispielswweise auch überwiegend oder vollständig, aus einem Metall, wie z.B. einem Edelstahl bzw. einer Nickelbasislegierung, besteht.

Nach einer neunten Ausgestaltung der ersten Weiterbildung Sensorbaugruppe ist vorgesehen, daß Membran und Ausgleichskörper aus einem gleichen Material bestehen, beispielsweise auch derart, daß Sensorfahne, Membran und Ausgleichskörper aus einem gleichen Material bestehen.

Nach einer ersten Weiterbildung des Meßsystems umfaßt dieses weiters: ein in der Verlauf nämlicher Rohrleitung einsetzbares Rohr mit einem Lumen, das dafür eingerichtet ist, das in der Rohrleitung strömende Fluid zu führen.

Nach einer ersten Ausgestaltung der ersten Weiterbildung Sensorbaugruppe weist die Sensorfahne eine Länge, gemessen als minimaler Abstand zwischen einem proximalen, nämlich an die Membran grenzenden Ende der Sensorfahne bis zu einem distalen, nämlich von der Membran bzw. deren Oberfläche entfernten Ende der Sensorfahne auf, welche Länge weniger als 95% eines Kalibers des Rohrs und/oder mehr als einer Hälfte nämlichen Kalibers entspricht.

Nach einer zweiten Ausgestaltung der ersten Weiterbildung Sensorbaugruppe ist in der Wandung des Rohrs eine, beispielsweise auch eine dem Haltern der Membran an der Wandung dienende Fassung aufweisende, Öffnung ausgebildet, und ist der Sensor in nämliche Öffnung eingesetzt, derart, daß die Membran die Öffnung überdeckt, beispielsweise nämlich hermetisch verschließt, und daß die erste Oberfläche der Membran dem Lumen des Rohrs zugewandt ist, mithin die Sensorfahne in nämliches Lumen hineinragt. Diese Ausgestaltung der Erfindung weiterbildend ist ferner vorgesehen, daß die Öffnung eine dem Haltern der Membran an der Wandung dienende Fassung aufweist, in der wenigstens eine, beispielsweise umlaufende und/oder kreisringartige, Dichtfläche ausgebildet ist. Die Membran kann hierbei zudem ein, beispielsweise kreisringförmiges, äußeres Randsegment aufweisen, in der wenigstens eine, beispielsweise umlaufende und/oder kreisringartige, Dichtfläche ausgebildet ist, wobei nämliche Dichtfläche und die Dichtfläche der Fassung dafür eingerichtet sind, die Öffnung, ggf. auch unter Zwischenlage wenigstens einer Dichtung, hermetisch zu verschließen.

Nach einer zweiten Weiterbildung des Meßsystems umfaßt dieses weiters: ein im Lumen des Rohrs angeordneten Stauköper, der dafür eingerichtet ist, im strömendem Fluid eine Kärmänsche Wirbelstrasse zu bewirken.

Ein Grundgedanke der Erfindung besteht darin, die angestrebte hohe nominelle Druckfestigkeit für die erfindungsgemäße Sensorbaugruppe, nicht zuletzt auch bei hohen Betriebstemperaturen von über 400°C, bzw. die angestrebte Verbesserung der Abhängigkeit der Druckfestigkeit der Sensorbaugruppe von der Betriebstemperatur (Druck-Temperatur-Kurve der Sensorbaugruppe) dadurch herbeizuführen, indem die Membran - im Gegensatz zu den im wesentlichen flachen Membranen herkömmlicher Sensorbaugruppen - schalenförmig ausgebildet und darüberhinaus in der Weise angeordnet ist, daß die die Sensorfahne tragende Oberfläche zumindest in dem an die Sensorfahne grenzenden Bereich konvex, nämlich in Richtung der Sensorfahne ausgebogen ist.

Ein Vorteil der Erfindung besteht u.a. darin, daß damit nicht nur auf sehr einfache Weise eine erhebliche Verbesserung der nominellen Druckfestigkeit bzw. der Druck-Temperatur-Kurve von Sensoren der in Rede stehenden Art erzielt werden kann, sondern daß dies erreicht wird, ohne dadurch die Meßempfindlichkeit, nämlich die Empfindlichkeit des Sensors auf die eigentlich zu erfassenden Druckschwankungen nennenswert zu verringern. Ein weiterer Vorteil der Erfindung ist zudem auch darin zu sehen, daß die erfindungsgemäße Sensorbaugruppe, abgesehen von der Form der Membran, prinzipiell gleich aufgebaut sein kann, wie bekannte Sensorbaugruppen konventioneller Sensoren bzw. damit gebildeter Meßsysteme. Darüberhinaus kann die Membran der erfindungsgemäßen Sensorbaugruppe auch aus den gleichen Materialien gefertigt werden, wie konventionelle Membranen, mithin die Herstell- bzw. Grenzkosten der erfindungsgemäßen Sensorbaugruppe etwa in der Größenordnung nämlicher Kosten konventioneller Sensorbaugruppen der in Rede stehenden Art liegen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen. Im einzelnen zeigen:
- Fig. 1, 2: schematisch in verschieden Ansichten ein - hier als Wirbel-Durchflußmeßgerät ausgebildetes - Meßsystem mit einem Sensor und einer Meß-Elektronik zum Messen wenigstens eines Strömungsparameters eines in einer Rohrleitung strömenden Fluids;
- Fig. 3a, 3b, 3c, 3d: schematisch, gleichwohl jeweils maßstäblich in verschiedenen, teilweise auch geschnittenen Ansichten eine Sensorbaugruppe für einen, insb. für die Verwendung in einem Meßsystem gemäß der Fig. 1 bzw. 2 geeigneten, Sensor;
- Fig. 4a, 4b: schematisch in zwei verschiedenen geschnittenen Seitenansichten eine weitere Variante einer Sensorbaugruppe für einen, insb. zur Verwendung in einem Meßsystem gemäß der Fig. 1 bzw. 2 geeigneten, Sensor; und
- Fig. 5: schematisch in einer Aufsicht eine weitere Variante einer Sensorbaugruppe für einen, insb. zur Verwendung in einem Meßsystem gemäß der Fig. 1 bzw. 2 geeigneten, Sensor;
- Fig. 6: schematisch in einer Aufsicht eine weitere Variante einer Sensorbaugruppe für einen, insb. zur Verwendung in einem Meßsystem gemäß der Fig. 1 bzw. 2 geeigneten, Sensor.

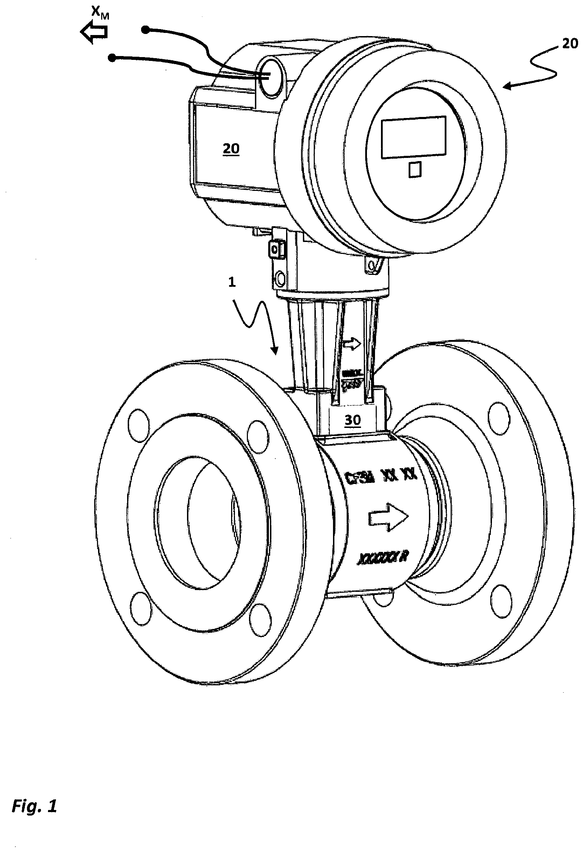

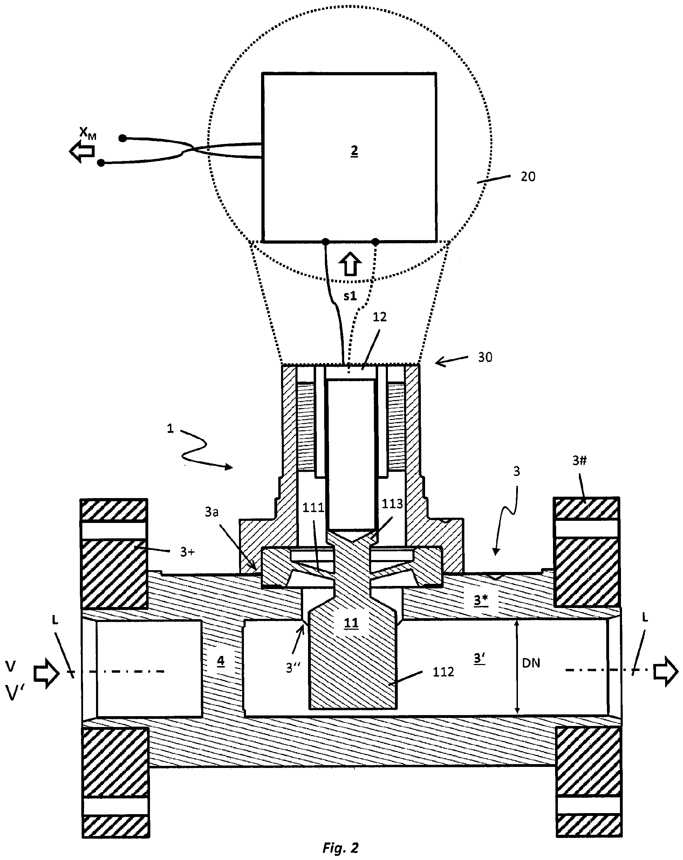

In Fig. 1 und 2 ist ein Ausführungsbeispiel für ein Meßsystem zum Messen wenigstens eines, ggf. auch zeitlich veränderlichen Strömungsparameters, wie z.B. einer Strömungsgeschwindigkeit v und/oder einer Volumendurchflußrate V', eines in einer Rohrleitung strömenden Fluids, beispielsweise eines heißen, insb. eine Temperatur von mehr als 400°C aufweisenden, und/oder zumindest zeitweise unter einem hohen Druck, insb. von mehr als 140 bar, stehenden Gases, gezeigt. Die Rohrleitung kann beispielsweise als Anlagenkomponente eines Wärmeversorgungsnetzes oder eines Turbinenkreislaufes ausgebildet, mithin kann das Fluid beispielsweise Dampf, insb. auch gesättigter Dampf oder überhitzter Dampf, sein. Fluid kann aber beispielsweise auch ein (komprimiertes) Erd- oder ein Biogas sein, mithin kann die Rohrleitung beispielsweise auch Komponente einer Erd- oder einer Biogasanlage oder einer Gasversorgungsnetzes sein.

Das Meßsystem weist einen Sensor 1 auf, der dafür vorgesehen bzw. ausgestaltet ist, Druckschwankungen im strömenden Fluid zu erfassen und in ein mit nämlichen Druckschwankungen korrespondierendes, beispielsweise elektrisches oder optisches, Sensorsignal s1 zu wandeln. Wie aus der Zusammenschau der Fig. 1 und 2 ersichtlich, umfaßt das Meßsystem desweiteren, eine - beispielsweise in einem druck- und/oder schlagfesten Schutzgehäuse 20 untergebrachte - Meß-Elektronik 2, die an den Sensor 1 angeschlossen ist bzw. im Betrieb des Meßsystems mit dem Sensor 1 kommuniziert. Die Meß-Elektronik 2 ist im besonderen dafür eingerichtet, das Sensorsignal s1 zu empfangen und zu verarbeiten, beispielsweise nämlich den wenigstens einen Strömungsparameters, beispielsweise also die Strömungsgeschwindigkeit v bzw. die Volumendurchflußrate V', repräsentierende Meßwerte X_{M} zu generieren. Die Meßwerte X_{M} können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden. Das Schutzgehäuse 20 für die Meß-Elektronik 2 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein.

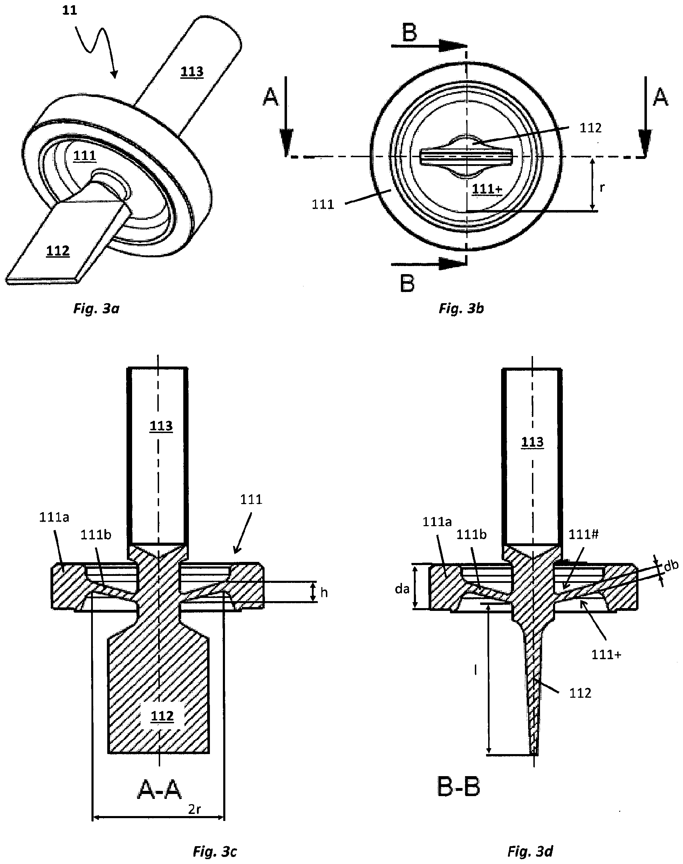

Der Sensor 1 umfaßt, wie auch in Fig. 2 und den Fig. 3a, 3b, 3c, 3d dargestellt bzw. aus einer Zusammenschau nämlicher Figuren ohne weiteres ersichtlich, eine Sensorbaugruppe 11, die mittels einer Membran 111 sowie einer sich ausgehend von einer ersten Oberfläche 111+ nämlicher Membran 111 erstreckenden Sensorfahne 112 gebildet ist. Die Sensorfahne 112 weist im hier gezeigten Ausführungsbeispiel eine Keilform auf; sie kann aber beispielsweise auch, wie bei derartigen Sensoren durchaus üblich, stab- oder plattenförmig ausgebildet sein. Membran 111 und Sensorfahne 112 können beispielsweise Bestandteile ein und desselben monolithischen Formteils sein, das beispielsweise gegossen oder durch 3D-Laserschmelzen hergestellt ist; Membran und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Die Membran kann, wie bei derartigen Sensorbaugruppen durchaus üblich, zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne zumindest anteilig aus einem Metall, beispielsweisenämlich einem Edelstahl bzw. einer Nickelbasislegierung, bestehen; insbesondere können Membran und Sensorfahne auch aus dem gleichen Material hergestellt werden.

Neben der Sensorbaugruppe 1 umfaßt der Sensor desweiteren ein - beispielsweise als piezoelektrischer Wandler, als Komponente eines Kondensators ausgebildetes, kapazitives oder beispielsweise auch als Komponente eines Fotodetektor ausgebildetes, optisches - Wandelerelement 2 zum Generieren eines zeitlich ändernde - typischerweise nämlich zumindest zeitweise periodische - Bewegungen der Sensorfahne bzw. gleichermaßen zeitlich ändernde Verformungen der Membran repräsentierenden, hier auch als Sensorsignal dienenden Signals, beispielsweise eine durch die vorbezeichneten Bewegungen modulierte veränderliche elektrische Spannung oder entsprechend moduliertes Laserlicht.

Nach einer weiteren Ausgestaltung der Erfindung umfaßt das Meßsystem ferner ein in der Verlauf der vorbezeichneten Rohrleitung einsetzbares Rohr 3 mit einem von einer - beispielsweise metallischen - Wandung 3* des Rohrs umhüllten Lumen 3', das sch von einem Einlaßende 3+ bis zu einem Auslaßende 3# erstreckt und das dafür eingerichtet ist, das in der Rohrleitung strömende Fluid zu führen. Im hier gezeigten Ausführungsbeispiel ist am Einlaßende 3+ wie auch am Auslaßende 3# jeweils ein dem Herstellen einer leckfreien Flanschverbindung mit jeweils einem korrespondierenden Flansch an einem ein- bzw. auslaßseitig Leitunsgsegment der Rohrleitung dienender Flansch vorgesehen. Ferner ist das Rohr 3 hier im wesentlichen gerade, beispielsweise nämlich als Hohlzylinder mit kreisförmigem Querschnitt ausgebildet, derart, daß das Rohr 3 eine das Einlaßende 3+ und das Auslaßende 3# imaginär verbindende gedachte gerade Längsachse L aufweist. Der Sensor 1 ist von außen durch eine in der Wandung eingeformte Öffnung 3" hindurch in das Lumen des Rohrs eingeführt und im Bereich nämlicher Öffnung - beispielsweise auch wieder lösbar - von außen an der Wandung 3* fixiert, und zwar so, daß die Oberfläche 111+ der Membran 111 dem Lumen 3' des Rohrs 3 zugewandt ist, mithin die Sensorfahne 112 in nämliches Lumen hineinragt. Insbesondere ist der Sensor 1 so in die Öffnung 3"eingesetzt, daß die Membran 111 die Öffnung 3" überdeckt bzw. hermetisch verschließt. Nämliche Öffnung kann beispielsweise so ausgebildet sein, daß sie- wie bei Meßsystemen der in Rede stehenden Art durchaus üblich - einen (Innen-) Durchmesser aufweist, der in einem Bereich zwischen 10 mm und ca. 50 mm liegt.

Nach einer weiteren Ausgestaltung der Erfindung ist in der der Öffnung 3" eine dem Haltern der Membran an der Wandung 3* dienende Fassung 3a ausgebildet. Der Sensor 1 kann hierbei beispielsweise durch stoffschlüssiges Verbinden, insb. nämlich durch Verschweißen oder Verlöten, von Membran 111 und Wandung 3* am Rohr 3 fixiert sein; er kann aber beispielsweise auch mit dem Rohr 3 lösbar verbundenen, beispielsweise nämlich ver- bzw. angeschraubt sein. In der der Fassung 3a kann ferner wenigstens eine, beispielsweise auch umlaufende bzw. kreisringartige, Dichtfläche ausgebildet sein, die dafür eingerichtet ist, im Zusammenspiel mit der Membran 111 und einem ggf. vorgesehenen, beispielsweise ringförmige oder ringscheibenförmige, Dichtelement die Öffnung 3" entsprechend abzudichten. Nicht zuletzt für den vorbeschriebenen Fall, daß die Sensorbaugruppe in die vorbezeichnete Fassung 3a eingesetzt bzw. daß die Membran 111 stoffschlüssig mit der Wandung des Rohrs 3 verbunden werden soll, weist die Membran 111 nach einer weiteren Ausgestaltung der Erfindung ein äußeres, beispielsweise im wesentlichen kreisringförmiges, Randsegment 111a mit einer Dicke da auf, die - wie in den Fig. 2 bzw. 3a, 3b, 3c, 3d angedeutet - im Vergleich zu einer minimalen Dicke db eines von nämlichem Randsegment 111a eingeschlossen inneren - hier nämlich die Sensorfahne 112 tragenden - Segment 111b wesentlich größer ist. Nämliches Randsegment 111a kann in vorteilhafter Weise ferner mit einer, beispielsweise auch mit der in der Öffnung 3" ggf. vorgesehenen Dichtfläche korrespondierenden und/oder kreisringartigen, Dichtfläche versehen sein.

Im hier gezeigten Ausführungsbeispiel ist das Meßsystem speziell als ein Wirbel-Durchflußmeßgrät mit einem im Lumen des Rohrs 3 - hier nämlich stromaufwärts des Sensors 1 - angeordneten, dem Bewirken einer *Kármánsche* Wirbelstrasse im strömenden Fluid dienenden Stauköper 4 ausgebildet. Sensor und Staukörper sind hierbei im besonderen so dimensioniert und angeordnet, daß die Sensorfahne 112 in einem solchen Bereich in das Lumen 3* des Rohrs bzw. das darin geführte Fluid hineinragt, der im Betrieb des Meßsystems regelmäßig von einer (stationär ausgebildeten) *Kármánschen* Wirbelstrasse eingenommen wird, so daß die mittels des Sensors 1 erfaßten Druckschwankungen durch am Staukörper 4 mit einer Ablösrate (∼ 1/f_{Vtx}) abgelöste gegenläufige Wirbel verursachte periodische Druckschwankungen sind und das Sensorsignal s1 eine mit der Ablöserate nämlicher Wirbel korrespondierende Signalfrequenz (∼ f_{Vtx}) aufweist. Im hier gezeigten Ausführungsbeispiel ist das Wirbel-Durchflußmeßgrät zudem als ein Meßsystem in Kompaktbauweise ausgebildet, bei dem die Meß-Elektronik 2 in einem - beispielsweise mittels eines halsförmigen Anschlußstutzen 30 - am Rohr gehalterten Schutzgehäuse 20 untergebracht ist.

Nach einer weiteren Ausgestaltung der Erfindung sind der Sensor 1 und das Rohr 3 ferner so dimensioniert, daß eine Länge I der Sensorfahne 112, gemessen als minimaler Abstand zwischen einem proximalen, nämlich an die Membran grenzenden Ende der Sensorfahne 112 bis zu einem distalen, nämlich von der Membran 111 bzw. deren Oberfläche 111+ entfernten (freien) Ende der Sensorfahne 112 mehr als einer Hälfte eines Kalibers DN des Rohrs 3 bzw. weniger als 95% nämlichen Kalibers DN entspricht. Die Länge I kann beispielsweise - wie bei vergleichsweise kleinem Kaliber von weniger als 50 mm durchaus üblich bzw. wie auch aus der Fig. 2 ersichtlich - auch so gewählt sein, daß nämliches distales Ende der Sensorfahne 112 nur noch einen sehr geringen minimalen Abstand zur Wandung 3* des Rohrs 3 aufweist. Bei Rohren mit vergleichsweise großem Kaliber von 50 mm oder mehr kann die Sensorfahne 112, wie bei Meßsystemen der in Rede stehenden Art durchaus üblich, beispielsweise auch deutlich kürzer ausgebildet sein, als eine Hälfte eines Kalibers des Rohrs 3.

Wie bereits erwähnt, ist die Sensorbaugruppe, mithin der damit gebildete Sensor bzw. das damit gebildete Meßsystem im besonderen dafür vorgesehen, zumindest gelegentlich eine hohe Temperatur von mehr als 400° und einen hohen Druck von mehr als 140 bar aufweisendes Fluid zu messen bzw. messen zu können. Um eine dafür erforderliche Korrelation zwischen Druckfestigkeit und Betriebstemperatur (Druck-Temperatur-Kurve) zu erreichen, ist die Membran der erfindungsgemäßen Sensorbaugruppe, wie auch in den Fig. 2, 3c, 3d, 4a bzw. 4b jeweils schematisch dargestellt, schalenförmig ausgebildet, nämlich zumindest abschnittsweise gewölbt, derart, daß die ersten Oberfläche 111+ der Membran 111 gekrümmt ist, wobei die Membran so geformt ist, daß, wie aus der Zusammenschau der Fig. 2, 3c, 3d, 4a, 4b ohne weiteres ersichtlich, zumindest der an die Sensorfahne 112 angrenzende Bereich der Oberfläche 111+ konvex ist. Wie in den Fig. 2, 3c, 3d schematisch dargestellt kann die Membran 111 hierbei im besonderen so geformt sein, daß eine der Oberfläche 111+ gegenüberliegende, nämlich bei in das Rohr 3 eingebauter Sensorbaugruppe 1 vom Lumen 3* abgewandte - hier zumindest teilweise ebenfalls gekrümmte und/oder zumindest teilweise konkave - zweite Oberfläche 111# vollständig bzw. zumindest überwiegend parallel zur ersten Oberfläche 111+ verläuft und/oder daß ein Bereich der zweiten Oberfläche 111#, der dem die Sensorfahne tragenden konvexen Bereich der Oberfläche 111+ gegenüberliegt, konkav ist; falls erforderlich kann die Membran 111 auch so geformt sein, das die Oberfläche 111# teilweise, ggf. überwiegend oder auch vollständig nicht-parallel ist zur Oberfläche 111+, beispielsweise derart, daß die Membran 111 in radialer Richtung bzw. entlang wenigstens einer Seitenlinie variierende Dicken aufweist.

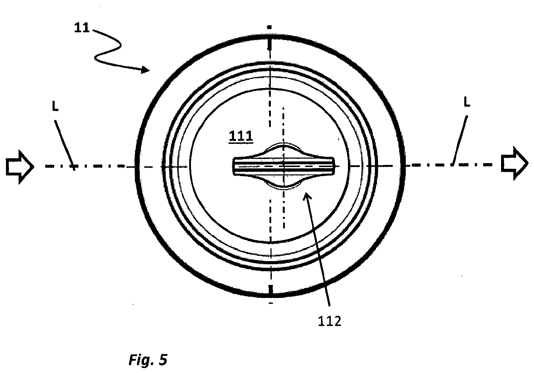

Nach einer weiteren Ausgestaltung der Erfindung ist die Membran ferner so geformt, daß der an die Sensorfahne 112 angrenzende Bereich der Oberfläche 111+ bezüglich wenigstens einer gedachten Symmetrieachse achsensymmetrisch. Nämliche Symmetrieachse kann beispielsweise einer der in Fig. 3b eingezeichneten Schnittlinien A bzw. B entsprechen. Ferner können Membran 111 und Sensorfahne 112 hierbei so ausgebildet und zueinander ausgerichtet sein, daß - wie auch aus einer Zusammenschau der Fig. 3a, 3b, 3c und 3c ohne weiteres ersichtlich - nämliche Symmetrieachse zu einer Trägheitshauptachse der Sensorfahne parallel verläuft und/oder derart, daß nämliche Symmetrieachse zu einer Trägheitshauptachse der Sensorfahne senkrecht ist. Alternativ oder in Ergänzung können die Sensorfahne 112 und die Membran 111 zudem so positioniert und zueinander ausgerichtet sein, daß - wie auch aus einer Zusammenschau der Fig. 3a, 3b, 3c und 3c ohne weiteres ersichtlich - eine Trägheitshauptachse der Membran 111 in Verlängerung mit einer Trägheitshauptachse der Sensorfahne 112 koinzidiert oder daß nämliche Trägheitshauptachse der Membran 111 in Verlängerung parallel zu nämlicher Trägheitshauptachse der Sensorfahne 112 verläuft, beispielsweise auch derart, daß nämliche Trägheitshauptachse der Sensorfahne 112 in Verlängerung parallel, mithin im Abstand zu nämlicher Trägheitshauptachse der Membran 111 verläuft, so daß - wie auch in Fig. 5 angedeutet - nämliche Trägheitshauptachse der Sensorfahne 112 nicht mit der Trägheitshauptachse der Membran 111 koinzidiert. Sensorfahne 112 und Membran 111 können zudem auch so positioniert und zueinander ausgerichtet sein, daß eine Trägheitshauptachse der Sensorfahne in Verlängerung parallel zu einer Trägheitshauptachse der Sensorbaugruppe verläuft bzw. damit koinzidiert, und/oder daß eine Trägheitshauptachse der Membran zu einer Trägheitshauptachse der Sensorbaugruppe 11 parallel verläuft bzw. damit koinzidiert.

Nach einer weiteren Ausgestaltung der Erfindung ist ferner vorgesehen bzw. ist die Membran so geformt, daß der an die Sensorfahne 112 angrenzende Bereich der ersten Oberfläche 111+ bezüglich genau zweier aufeinander senkrecht stehender gedachter Symmetrieachsen achsensymmetrisch ist, beispielsweise nämlich derart, daß - wie auch aus einer Zusammenschau der Fig. 3a, 3b 3c, 3d ersichtlich - zumindest eine der beiden Symmetrieachsen zu einer Trägheitshauptachse der Sensorfahne parallel verläuft und/oder derart, daß eine Trägheitshauptachse der Sensorfahne zu einer der gedachten Symmetrieachsen senkrecht ist und zur anderen gedachten Symmetrieachse parallel verläuft.

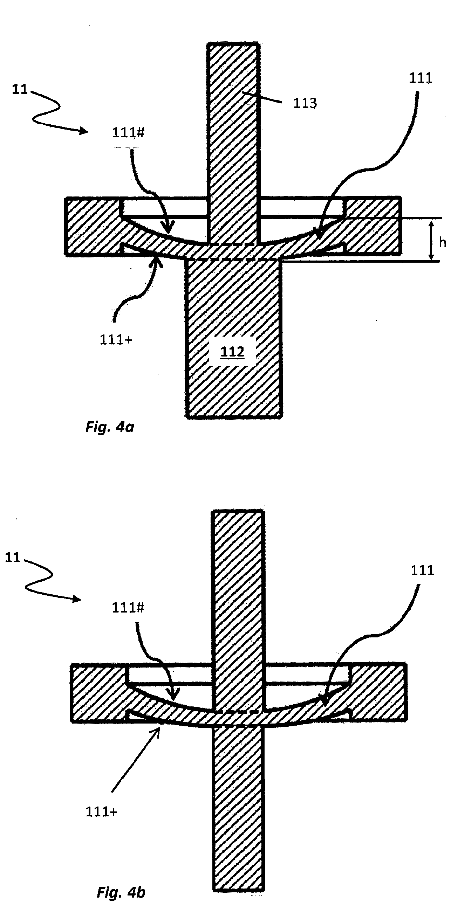

Die Membran 111 ist nach einer weiteren Ausgestaltung der Erfindung so geformt ist, daß zumindest der an die Sensorfahne 112 angrenzende Bereich der Oberfläche 111+ rotationssymmetrisch ist. Wie aus einer Zusammenschau der Fig. 2, 3a, 3b 3c, 3d ohne weiteres ersichtlich, kann die Membran 111 dabei z.B. zumindest teilweise konusförmig ausgbildet sein, mithin kann die Oberfläche 111+, nicht zuletzt auch deren an die Sensorfahne angrenzende Bereich, zumindest teilweise einer Mantelfläche einer Kegelstumpf entsprechen, beispielsweise derart, daß - wie auch aus den Fig. 2 bzw. 3c und 3d ohne weiteres ersichtlich - eine gedachte Deckfläche nämlichen Kegelstumpfs mit einer Querschnittsfläche der Sensorfahne korrespondiert bzw. nämlicher Querschnittsfläche entspricht. Alternativ oder in Ergänzung kann die Membran, beispielsweise auch so geformt sein, daß - wie in den Fig. 4a, 4b schematisch dargestellt - deren Oberfläche 111+, nicht zuletzt auch deren an die Sensorfahne angrenzende Bereich, zumindest teilweise einer Oberfläche einer Kugelzone entspricht, beispielsweise derart, daß - wie auch aus Fig. 4a und 4b bzw. deren Zusammenschau ersichtlich - eine gedachte Deckfläche nämlicher Kugelzone mit einer Querschnittsfläche der Sensorfahne korrespondiert bzw. nämlicher Querschnittsfläche entspricht, daß also zumindest der an die Sensorfahne angrenzende Bereich der ersten Oberfläche 111 + sphärisch geformt ist. Alternativ oder in Ergänzung die Membran aber auch so geformt sein, daß die Oberfläche 111+ zumindest teilweise asphärisch ist, beispielsweise auch deren an die Sensorfahne angrenzende Bereich.

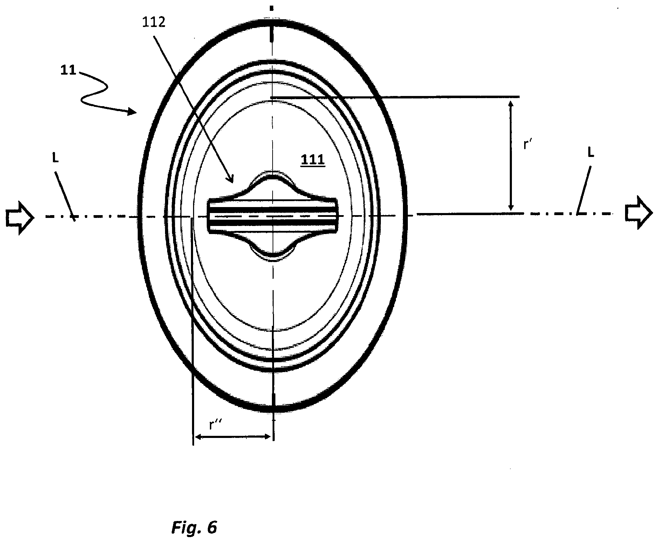

Die Membran ist kann ferner in so geformt sein, daß zumindest das die Sensorfahne 112 tragende, mithin das den an die Sensorfahne angrenzende Bereich der ersten Oberfläche 111+ bildende Segment 111b rotationssymmetrisch ist, insb. nämlich als ein Zylindersymmetrie aufweisender Rotationskörper ausgebildet ist. Alternativ kann die die Membran aber auch so geformt sein, nicht zuletzt zwecks einer weiteren Optimierung von Meßempfindlichkeit und Druckfestigkeit, daß die erste Oberfläche 111+ der Membran bzw. deren an die Sensorfahne 112 angrenzende Bereich nicht rotationssymmetrisch ist, beispielsweise nämlich lediglich flächensymmetrisch ist und/oder beispielsweise einem Segment einer Mantelfläche eines Ellipsoids entspricht; dies im besonderen in der Weise, daß, wie auch in Fig. 6 gezeigt bzw. aus einer Zusammenschau von Fig. 2 und Fig. 6 ersichtlich, im Ergebnis eine größte Halbachse (r') des der Form des dem an die Sensorfahne angrenzenden Bereich der Oberfläche 111+ entsprechenden Ellipsoids quer zur Längsachse L des Rohrs 3 und eine mittlere Halbachse (r") nämlichen Ellipsoiden parallel zur Längsachse L verlaufen.

Indem die Membran in der vorbezeichneten Weise geformt, nämlich grundsätzlich schalenförmig mit konvexer Oberfläche 111+ zumindest in einem an die Sensorfahne grenzenden Bereich ausgebildet ist, kann auf einfache gleichwohl sehr effektive Weise eine drastische Erhöhung der nominellen Druckfestigkeit bzw. eine drastische Verbesserung der Abhängigkeit der Druckfestigkeit von der Betriebstemperatur erzielt werden, ohne im Gegenzug eine Meßempfindlichkeit, nämlich eine Empfindlichkeit des Sensors auf die eigentlich zu erfassenden Druckschwankungen auf ein für die - nicht zuletzt auch in industriellen Anwendung - typischerweise geforderte hohe Meßgenauigkeit untaugliches Maß abzusenken. Nach einer weiteren Ausgestaltung der Erfindung ist die Membran im besonderen so geformt ist, daß - wie auch aus einer Zusammenschau der Fign. 3a, 3b, 3c und 3d ohne weiteres ersichtlich - eine Membran-Höhe h, gemessen als ein minimaler Abstand eines Flächenschwerpunkts der Oberfläche 111+ bis zu einer durch einen umlaufenden - beispielsweise auch unmittelbar an das vorbezeichnete Randsegment 111a grenzenden - äußeren Rand des an die Sensorfahne angrenzenden Bereichs der ersten Oberfläche einbeschriebenen gedachten Projektionsfläche kleiner ist als ein Membran-Durchmesser 2r, gemessen als ein größter Durchmesser nämlicher Projektionsfläche ist, insb. nämlich kleiner ist als ein Radius r bzw. - im Falle einer elliptischen Projektionsfläche - kleiner ist eine größte Halbachse r' nämlicher Projektionsfläche, beispielsweise aber auch kleiner ist als eine kleinste Halbachse r" nämlicher Projektionsfläche. Ein sehr guter Kompromiss zwischen möglichst hoher Druckfestigkeit einerseits und möglichst hoher Meßempfindlichkeit anderseits kann beispielsweise erreicht werden, indem die Membran so geformt ist, daß ein Durchmesser-zu- Höhe-Verhältnis der Membran (2r/h), definiert als ein Verhältnis nämlichen Membran-Durchmessers zu nämlicher Membran-Höhe kleiner als 30 und/oder größer als 2, insb. kleiner als 20 und/oder größer als 5, gewählt bzw. ausgebildet ist. Alternativ oder in Ergänzung kann die Membran 111, abgestimmt auf die vorbezeichnete Länge I der Sensorfahne 112, ferner so dimensioniert sein, daß ein Verhältnis nämlichen Membran-Durchmessers 2r zu nämlicher Länge I weniger als 2 und/oder mehr als 0,5 beträgt.

Zwecks einer weiteren Optimierung von Meßempfindlichkeit und Druckfestigkeit kann die Membran 111 zudem beispielsweise auch Zonen unterschiedlicher Dicke aufweisen. Daher ist die Membran 111 nach einer weiteren Ausgestaltung der Erfindung ferner so ausgebildet, daß das die Sensorfahne 112 tragenden Segment 111b eine eine Mitte der Membran bildenden erste Zone mit einer ersten Dicke und eine an nämlich erste Zone angrenzende, insb. diese umschließende, zweite Zone mit einer von der ersten Dicke verschiedenen zweiten Dicke aufweist, beispielsweise derart, daß die erste Dicke kleiner als die zweite Dicke ist, insb. nämlich daß die erste Dicke der minimalen Dicke db entspricht.

Zum Kompensieren von aus allfälligen Bewegungen der Sensorbaugruppe - etwa infolge von Vibration der angeschlossenen Rohrleitung, resultierenden Kräften und/oder Momenten bzw. zum Vermeiden von daraus resultierenden unerwünschten, nämlich das Sensorsignal s1 verfälschenden Bewegungen der Sensorfahne bzw. der Membran weist die Sensorbaugruppe 11 nach einer weiteren Ausgestaltung der Erfindung ferner einen sich ausgehend von der zweiten Oberfläche 111# der Membran 111 erstreckenden, beispielsweise stab-, platten- oder hülsenförmigen, Ausgleichskörper 113 auf. Nämlicher Ausgleichskörper 113 kann zudem auch als eine Halterung des Wandlerelements 12 dienen oder auch als ein Bestandteil des Wandlerelements 12 dienen, beispielsweise als eine bewegliche Elektrode eines nämliches (kapazitives) Wandlerelement bildenden Kondensators. Nach einer weiteren Ausgestaltung ist die Membran ferner so geformt bzw. ist der Ausgleichskörper so positioniert, daß zumindest ein an den Ausgleichskörper 113 angrenzender Bereich der zweiten Oberfläche 111# konkav und/oder rotationssymmetrisch ist, insb. nämlich parallel zum an die Sensorfahne angrenzenden Bereich der ersten Oberfläche 111 + verläuft.

Der Ausgleichskörper 113 kann beispielsweise aus dem gleichen Material bestehen, wie die Membran und/oder wie die Sensorfahne, beispielsweise einem Metall. Beispielsweise kann der Ausgleichskörper 113 nämlich aus einem Edelstahl bzw. einer Nickelbasislegierung hergestellt sein. Nach einer weiteren Ausgestaltung der Erfindung sind Membran 111 und Ausgleichskörper 113 stoffschlüssig miteinander verbunden, beispielsweise miteinander verschweißt bzw. verlötet, mithin ist vorgesehen, Ausgleichskörper 113 und Membran 111 aus entsprechend stoffschlüssig miteinander verbindbaren Materialien herzustellen. Alternativ können Membran 111 und Ausgleichskörper 113 aber auch Bestandteile ein und desselben monolithischen Formteils sein, beispielsweise auch derart, daß Sensorfahne 111, Membran 112 und Ausgleichskörper 113 Bestandteile nämlichen Formteils sind.

Sensorfahne 112 und Ausgleichskörper 113 können desweiteren - wie auch aus einer Zusammenschau der Fig. 3c und 3d bzw. einer Zusammenschau der Fig. 4a und 4b ersichtlich - zueinander fluchtend angeordnet sein, derart, daß eine Trägheitshauptachse der Sensorfahne 112 in Verlängerung mit einer Trägheitshauptachse des Ausgleichskörpers 113 koinzidiert. Alternativ oder in Ergänzung können der Ausgleichskörper 113 und die Membran 111 zudem so positioniert und zueinander ausgerichtet sein, daß eine Trägheitshauptachse der Membran 111 in Verlängerung mit einer Trägheitshauptachse des Ausgleichskörpers 113 koinzidiert oder auch so, daß nämliche Trägheitshauptachse der Membran 111 in Verlängerung parallel zu nämlicher Trägheitshauptachse des Ausgleichskörpers 113 verläuft; dies beispielsweise auch derart, daß Sensorfahne 112 und Ausgleichskörper 113 in der vorbezeichneten Weise miteinander fluchten, jedoch sowohl die Trägheitshauptachse des Ausgleichskörpers als auch Trägheitshauptachse der Sensorfahne jeweils in Verlängerung parallel, mithin im Abstand zur Trägheitshauptachse der Membran verlaufen, so daß also nicht nur nämliche Trägheitshauptachse der Sensorfahne 112 - wie beispielsweise auch in Fig. 5 gezeigt -, sondern auch nämliche Trägheitshauptachse des Ausgleichskörpers 113 mit der Trägheitshauptachse der Membran 111 nicht koinzidiert. Darüberhinaus können Sensorfahne 112, Ausgleichskörper 113 und Membran 111 auch so positioniert und zueinander ausgerichtet sein, daß - wie beispielsweise auch aus einer Zusammenschau der Fig. 2, 3a, 3b, 3c und 3d ersichtlich - eine Trägheitshauptachse der Sensorbaugruppe 11 sowohl zu einer Trägheitshauptachse der Sensorfahne 112 als auch einer Trägheitshauptachse des Ausgleichskörpers 113 wie auch einer Trägheitshauptachse der Membran 111 parallel verläuft oder sowohl mit nämlicher Trägheitshauptachse der Sensorfahne als auch mit nämlicher Trägheitshauptachse Ausgleichskörpers wie auch mit nämlicher Trägheitshauptachse der Membran koinzidiert.

## Patentansprüche

1. Sensorbaugruppe für einen Sensor zum Erfassen von Druckschwankungen in einem strömenden Fluid, insbesondere zum Erfassen von Druckschwankungen in einer in dem strömenden Fluid ausgebildeten Kármánschen Wirbelstrasse, welche Sensorbaugruppe umfaßt:
- eine schalenförmige, nämlich zumindest abschnittsweise gewölbte Membran (111) mit einer gekrümmten ersten Oberfläche (111+) und einer gegenüberliegenden, gekrümmten, insb. zur ersten Oberfläche (111+) zumindest teilweise parallelen und/oder zumindest teilweise nicht-parallelen, zweiten Oberfläche (111#);
- sowie eine sich ausgehend von der ersten Oberfläche (111+) der Membran erstreckende, insb. stabförmigen oder plattenförmige oder keilförmige, Sensorfahne (112);
**dadurch gekennzeichnet, dass** die Membran so geformt ist, daß zumindest ein an die Sensorfahne angrenzender Bereich der ersten Oberfläche (111+) konvex ist.

2. Sensorbaugruppe nach einem der vorherigen Ansprüche,
- wobei die Membran (111) so geformt ist, daß der an die Sensorfahne (112) angrenzende Bereich der ersten Oberfläche (111+) asphärisch ist; und/oder
- wobei die Membran (111) so geformt ist, daß der an die Sensorfahne (112) angrenzende Bereich der ersten Oberfläche (111+) bezüglich wenigstens einer gedachten Symmetrieachse achsensymmetrisch ist, insb. derart, daß nämliche Symmetrieachse zu einer Trägheitshauptachse der Sensorfahne parallel verläuft und/oder derart, daß nämliche Symmetrieachse zu einer Trägheitshauptachse der Sensorfahne senkrecht ist; und/oder
- wobei die Membran so geformt ist, daß der an die Sensorfahne angrenzende Bereich der ersten Oberfläche bezüglich genau zweier aufeinander senkrecht stehender gedachter Symmetrieachsen achsensymmetrisch ist, insb. derart, daß zumindest eine der Symmetrieachsen zu einer Trägheitshauptachse der Sensorfahne parallel verläuft und/oder derart, daß eine Trägheitshauptachse der Sensorfahne zu einer der gedachten Symmetrieachsen senkrecht ist und zur anderen gedachten Symmetrieachse parallel verläuft; und/oder
- wobei die Membran so geformt ist, daß der an die Sensorfahne angrenzende Bereich der ersten Oberfläche rotationssymmetrisch ist; und/oder
- wobei ein die Sensorfahne (112) tragendes Segment (111b) der Membran eine eine Mitte der Membran bildendende erste Zone mit einer ersten Dicke und eine an nämlich erste Zone angrenzende, insb. diese umschließende, zweite Zone mit einer von der ersten Dicke verschiedenen zweiten Dicke aufweist, insb. derart, daß die erste Dicke kleiner als die zweite Dicke ist; und/oder
- wobei zumindest ein dem an die Sensorfahne angrenzenden Bereich der ersten Oberfläche gegenüberliegender Bereich der zweiten Oberfläche konkav ist; und/oder
- wobei die Membran so geformt ist, daß eine Membran-Höhe, gemessen als ein minimaler Abstand eines Flächenschwerpunkts der ersten Oberfläche bis zu einer durch einen umlaufenden äußeren Rand des an die Sensorfahne angrenzenden Bereichs der ersten Oberfläche einbeschriebenen gedachten Projektionsfläche kleiner als ein Membran-Durchmesser, gemessen als ein größter Durchmesser nämlicher Projektionsfläche ist, insb. derart, daß nämlicher Membran-Durchmesser kleiner als eine größte Halbachse bzw. kleiner als ein Radius nämlicher Projektionsfläche, ist und/oder daß ein Durchmesser-zu- Höhe-Verhältnis der Membran, definiert als ein Verhältnis nämlichen Membran-Durchmessers zu nämlicher Membran-Höhe kleiner als 30 und/oder größer als 2, insb. kleiner als 20 und/oder größer als 5, ist, und/oder derart, daß ein Verhältnis nämlichen Membran-Durchmessers zu einer Länge der Sensorfahne (112), gemessen als minimaler Abstand zwischen einem proximalen, nämlich an die Membran (111) grenzenden Ende der Sensorfahne (112) bis zu einem distalen, nämlich von der Membran (111) bzw. deren Oberfläche (111+) entfernten Ende der Sensorfahne (112), weniger als 2 und/oder mehr als 0,5 beträgt; und/oder
- wobei die Membran zumindest teilweise konusförmig ist.

3. Sensorbaugruppe nach einem der vorherigen Ansprüche, wobei die Membran so geformt ist, daß zumindest der an die Sensorfahne angrenzende Bereich der ersten Oberfläche, einer Oberfläche einer Kugelzone entspricht, insb. derart, daß eine Deckfläche nämlicher Kugelzone mit einer Querschnittsfläche der Sensorfahne korrespondiert bzw. nämlicher Querschnittsfläche entspricht.

4. Sensorbaugruppe nach einem der Ansprüche 1 bis 2, wobei die Membran so geformt ist, daß zumindest der an die Sensorfahne angrenzende Bereich der ersten Oberfläche einer Mantelfläche eines Kegelstumpfs entspricht.

5. Sensorbaugruppe nach einem der Ansprüche 1 bis 2, wobei die Membran so geformt ist, daß zumindest der an die Sensorfahne angrenzende Bereich der ersten Oberfläche einem Segment einer Mantelfläche eines Ellipsoids entspricht.

6. Sensorbaugruppe nach einem der vorherigen Ansprüche,
- wobei Sensorfahne und Membran so positioniert und zueinander ausgerichtet sind, daß eine Trägheitshauptachse der Sensorfahne zu einer Trägheitshauptachse der Sensorbaugruppe parallel verläuft oder damit koinzidiert; und/oder
- wobei Sensorfahne und Membran so positioniert und zueinander ausgerichtet sind, daß eine Trägheitshauptachse der Membran in Verlängerung parallel zu einer Trägheitshauptachse der Sensorbaugruppe verläuft, insb. nämlich damit koinzidiert; und/oder
- wobei die Membran zumindest anteilig, insb. überwiegend oder vollständig, aus einem Metall, insb. einem Edelstahl bzw. einer Nickelbasislegierung, besteht; und/oder
- wobei die Sensorfahne zumindest anteilig, insb. überwiegend oder vollständig, aus einem Metall, insb. einem Edelstahl bzw. einer Nickelbasislegierung, besteht; und/oder
- wobei Membran und Sensorfahne aus einem gleichen Material bestehen; und/oder
- wobei Membran und Sensorfahne Bestandteile ein und desselben, insb. gegossenen oder durch 3D-Laserschmelzen hergestellten, monolithischen Formteils sind; und/oder
- wobei Membran und Sensorfahne stoffschlüssig miteinander verbunden, insb. nämlich miteinander verschweißt bzw. verlötet, sind.

7. Sensorbaugruppe nach einem der vorherigen Ansprüche, weiters umfassend: einen sich ausgehend von der zweiten Oberfläche der Membran erstreckenden, insb. stabförmigen oder plattenförmigen oder hülsenförmigen, Ausgleichskörper zum Kompensieren von aus Bewegungen der Sensorbaugruppe resultierenden Kräften und/oder Momenten.

8. Sensorbaugruppe nach dem vorherigen Anspruch,
- wobei zumindest ein an den Ausgleichskörper angrenzender Bereich der zweiten Oberfläche konkav ist; und/oder
- wobei Membran und Ausgleichskörper stoffschlüssig miteinander verbunden, insb, nämlich miteinander verschweißt bzw. verlötet, sind; und/oder
- wobei Sensorfahne und Ausgleichskörper zueinander fluchtend angeordnet sind; und/oder
- wobei die Membran so geformt ist, daß der an den Ausgleichskörper angrenzende Bereich der zweiten Oberfläche rotationssymmetrisch ist; und/oder
- wobei der Ausgleichskörper und die Membran so positioniert und zueinander ausgerichtet sind, daß eine Trägheitshauptachse der Membran in Verlängerung parallel zu einer Trägheitshauptachse des Ausgleichskörpers verläuft, insb. nämlich damit koinzidiert; und/oder
- wobei Sensorfahne, Ausgleichskörper und Membran so positioniert und zueinander ausgerichtet sind, daß eine Trägheitshauptachse der Sensorbaugruppe sowohl zu einer Trägheitshauptachse der Sensorfahne als auch zu einer Trägheitshauptachse des Ausgleichskörpers wie auch zu einer Trägheitshauptachse der Membran parallel verläuft bzw. nämliche Trägheitshauptachse der Sensorbaugruppe sowohl mit nämlicher Trägheitshauptachse der Sensorfahne als auch mit nämlicher Trägheitshauptachse des Ausgleichskörpers wie auch mit nämlicher Trägheitshauptachse der Membran koinzidiert; und/oder
- wobei Membran und Ausgleichskörper Bestandteile ein und desselben monolithischen Formteils sind, insb. derart, daß Sensorfahne, Membran und Ausgleichskörper Bestandteile nämlichen Formteils sind; und/oder
- wobei der Ausgleichskörper zumindest anteilige, insb. überwiegend oder vollständig, aus einem Metall, insb. einem Edelstahl bzw. einer Nickelbasislegierung, besteht; und/oder
- wobei Membran und Ausgleichskörper aus einem gleichen Material bestehen, insb. derart, daß Sensorfahne, Membran und Ausgleichskörper aus einem gleichen Material bestehen.

9. Sensorbaugruppe nach einem der vorherigen Ansprüche, wobei die Membran ein, insb. kreisringförmiges und/oder mit einer Dichtfläche versehenes, äußeres Randsegment (111 a) aufweist.

10. Sensorbaugruppe nach dem vorherigen Anspruch,
- wobei das äußere Randsegment (111a) dafür eingerichtet ist, mit einer dem Haltern der Membran an einer Wandung eines Rohrs dienenden Fassung (3a), insb. stoffschlüssige und/oder hermetisch dicht, verbunden zu werden, insb. derart, daß die Membran eine in der Wandung des Rohrs vorgesehene Öffnung überdeckt, insb. nämlich hermetisch verschließt, und/oder derart, daß die erste Oberfläche der Membran einem Lumen des Rohrs zugewandt ist, mithin die Sensorfahne in nämliches Lumen hineinragt; und/oder
- wobei in dem äußeren Randsegment (111a) wenigstens eine, insb. umlaufende und/oder kreisringartige, Dichtfläche ausgebildet ist; und/oder
- wobei das äußere Randsegment (111a) einen umlaufenden äußeren Rand des an die Sensorfahne angrenzenden konvexen Bereichs der ersten Oberfläche bildet.

11. Sensor zum Erfassen von Druckschwankungen in einem strömenden Fluid, insb. zum Erfassen von Druckschwankungen in einer im strömenden Fluid ausgebildeten *Kármánschen* Wirbelstrasse, weicher Sensor umfaßt:
- eine Sensorbaugruppe (11) gemäß einem der vorherigen Ansprüche;
- sowie ein Wandelerelement (12) zum Generieren eines zeitlich ändernde, insb. zumindest zeitweise periodische, Bewegungen der Sensorfahne und/oder zeitlich ändernde, insb. zumindest zeitweise periodische, Verformungen der Membran repräsentierenden, insb. elektrischen oder optischen, Sensorsignals.

12. Meßsystem zum Messen wenigstens eines, insb. zeitlich veränderlichen, Strömungsparameters, insb. einer Strömungsgeschwindigkeit und/oder einer Volumendurchflußrate, eines in einer Rohrleitung strömenden Fluids, welches Meßsystem umfaßt:
- zum Erfassen von Druckschwankungen im strömenden Fluid, insb. nämlich zum Erfassen von Druckschwankungen in einer im strömenden Fluid ausgebildeten *Kármánschen* Wirbelstrasse, einen Sensor (1) gemäß Anspruch 11;
- sowie eine Meß-Elektronik (2), die dafür eingerichtet ist, das Sensorsignal zu empfangen und zu verarbeiten, insb. nämlich den wenigstens einen Strömungsparameter repräsentierende Meßwerte (X_{M}) zu generieren.

13. Meßsystem nach dem vorherigen Anspruch, weiters umfassend: ein in den Verlauf nämlicher Rohrleitung einsetzbares Rohr (3) mit einem Lumen (3'), das dafür eingerichtet ist, das in der Rohrleitung strömende Fluid zu führen.

14. Meßsystem nach dem vorherigen Anspruch, wobei die Sensorfahne (112) eine Länge, gemessen als minimaler Abstand zwischen einem proximalen, nämlich an die Membran (111) grenzenden Ende der Sensorfahne (112) bis zu einem distalen, nämlich von der Membran (111) bzw. deren Oberfläche (111+) entfernten Ende der Sensorfahne (112) aufweist, welche Länge weniger als 95% eines Kalibers (DN) des Rohrs (3) und/oder mehr als einer Hälfte nämlichen Kalibers (DN) entspricht.

15. Meßsystem nach einem der Ansprüche 13 bis 14,
- wobei in der Wandung des Rohrs (3) eine, insb. eine dem Haltern der Membran an der Wandung dienende Fassung (3a) aufweisende, Öffnung (3") ausgebildet ist,
- und wobei der Sensor (1) in nämliche Öffnung (3") eingesetzt ist, derart, daß die Membran die Öffnung (20') überdeckt, insb. nämlich hermetisch verschließt, und daß die erste Oberfläche der Membran dem Lumen (3') des Rohrs zugewandt ist, mithin die Sensorfahne in nämliches Lumen hineinragt.

16. Meßsystem nach dem vorherigen Anspruch, wobei die Öffnung (3") eine dem Haltern der Membran an der Wandung dienende Fassung (3a) aufweist.

17. Meßsystem nach dem vorherigen Anspruch, wobei in der Fassung (3a) wenigstens eine, insb. umlaufende und/oder kreisringartige, Dichtfläche ausgebildet ist.

18. Meßsystem nach dem vorherigen Anspruch,
- wobei die Membran ein, insb. kreisringförmiges, äußeres Randsegment (111a) aufweist, in der wenigstens eine, insb. umlaufende und/oder kreisringartige, Dichtfläche ausgebildet ist, und
- wobei nämliche Dichtfläche und die Dichtfläche der Fassung dafür eingerichtet sind, die Öffnung, insb. unter Zwischenlage wenigstens einer Dichtung, hermetisch zu verschließen.

19. Meßsystem nach einem der Ansprüche 13 bis 18, weiters umfassend: ein im Lumen des Rohrs (3) angeordneten Stauköper (4), der dafür eingerichtet ist, im strömendem Fluid eine *Kármánsche* Wirbelstrasse zu bewirken.

20. Verwenden eines Meßsystems nach einem der Ansprüche 12 bis 19 zum Messen eines Strömungsparameters - insb. nämlich einer Strömungsgeschwindigkeit und/oder einer Volumendurchflußrate und/oder einer Massendurchflußrate - eines in einer Rohrleitung strömenden, insb. eine Temperatur von mehr als 400°C und/oder mit einem Druck von mehr als 140 bar auf die Membran des Sensors wirkenden, Fluids, insb. einem Dampf.

## Claims

1. Sensor assembly for a sensor designed to measure pressure fluctuations in a flowing fluid, particularly to measure pressure fluctuations in a Karman vortex street formed in the flowing fluid, said sensor assembly comprising:
- a basin-like diaphragm (111), particularly at least curved in part, with a first curved surface (111+) and a second curved surface (111#) which is located opposite the first surface, said second surface particularly being at least partially parallel and/or at least partially non-parallel to the first surface (111+);
- as well as a sensor tab (112), particularly in the form of a rod or plate or wedge, said tab extending from the first surface (111+) of the diaphragm;
**characterized in that**
the diaphragm is formed in such a way that at least an area of the first surface (111+), which is adjacent to the sensor tab, is convex.

2. Sensor assembly as claimed in the previous claim,
- wherein the diaphragm (111) is formed in such a way that the area of the first surface (111+), which is adjacent to the sensor tab (112), is aspherical; and/or
- wherein the diaphragm (111) is formed in such a way that the area of the first surface (111+), which is adjacent to the sensor tab (112), is axisymmetric in relation to at least one imaginary axis of symmetry, particularly in such a way that said axis of symmetry is parallel to a principal axis of inertia of the sensor tab and/or in such a way that said axis of symmetry is perpendicular to a principal axis of inertia of the sensor tab; and/or
- wherein the diaphragm is formed in such a way that the area of the first surface, which is adjacent to the sensor tab, is axisymmetric in relation to precisely two imaginary axes of symmetry which are perpendicular to one another, particularly in such a way that at least one of the axes of symmetry is parallel to a principal axis of inertia of the sensor tab and/or in such a way that a principal axis of inertia of the sensor tab is perpendicular to one of the imaginary axes of symmetry and is parallel to the other imaginary axis of symmetry; and/or
- wherein the diaphragm is formed in such a way that the area of the first surface, which is adjacent to the sensor tab, is rotationally symmetric; and/or
- wherein a segment (111b) of the diaphragm - said segment carrying the sensor tab (112) - features a first zone forming the centre of the diaphragm, said first zone having a first thickness, and a second zone adjacent to said first zone, particularly surrounding said first zone, said second zone having a second thickness that is different from the first thickness, particularly in such a way that the first thickness is less than the second thickness, and/or
- wherein at least one area of the second surface is concave - said area being opposite the area, adjacent to the sensor tab, of the first surface; and/or
- wherein the diaphragm is formed in such a way that a diaphragm height - measured as a minimum distance of a centroid of the first surface to an imaginary projection surface defined by a circumferential outer edge of the area of the first surface that is adjacent to the sensor tab - is smaller than a diameter of the diaphragm, measured as a largest diameter of said projection surface, particularly in such a way that said diaphragm diameter is less than a largest half-axis or smaller than a radius of said projection surface, and/or in such a way that a diameter-to-height ratio of the diaphragm, defined as a ratio of said diaphragm diameter to said diaphragm height, is less than 30 and/or greater than 2, particularly less than 20 and/or greater than 5, and/or in such a way that a ratio of said diaphragm diameter to a length of the sensor tab (112) - measured as the minimum distance between a proximal end of the sensor tab (112) - specifically adjacent to the diaphragm (111) - to a distal end of the sensor tab (112) - specifically at a distance from the diaphragm (111) or the diaphragm's surface (111+) - is less than 2 and/or greater than 0.5; and/or
- wherein the diaphragm is at least partially conical.

3. Sensor assembly as claimed in one of the previous claims, wherein the diaphragm is formed in such a way that at least the area of the first surface that is adjacent to the sensor tab corresponds to a surface of a spherical zone, particularly in such a way that a cover area of said spherical zone corresponds to a cross-sectional area of the sensor tab or corresponds to said cross-sectional area.

4. Sensor assembly as claimed in one of the Claims 1 to 2, wherein the diaphragm is formed in such a way that at least the area of the first surface that is adjacent to the sensor tab corresponds to a lateral surface of a frustum.

5. Sensor assembly as claimed in one of the Claims 1 to 2, wherein the diaphragm is formed in such a way that at least the area of the first surface that is adjacent to the sensor tab corresponds to a segment of a lateral surface of an ellipsoid.

6. Sensor assembly as claimed in one of the previous claims,
- wherein the sensor tab and the diaphragm are positioned and aligned in relation to one another in such a way that a principal axis of inertia of the sensor tab is parallel to a principal axis of inertia of the sensor assembly, or coincides with it; and/or
- wherein the sensor tab and diaphragm are positioned and aligned in relation to one another in such a way that a principal axis of inertia of the diaphragm extends, over the length, such that it is parallel to a principal axis of inertia of the sensor assembly, particularly coincides with it; and/or
- wherein the diaphragm is made at least partially, particularly essentially or completely, from a metal, particularly a stainless steel or a nickel-based alloy; and/or
- wherein the sensor tab is made at least partially, particularly essentially or completely, from a metal, particularly a stainless steel or a nickel-based alloy; and/or
- wherein the diaphragm and the sensor tab are made from the same material; and/or
- wherein the diaphragm and the sensor tab are constituent parts of one and the same monolithic molded part, particularly molded or produced using 3D laser melting; and/or
- wherein the diaphragm and the sensor tab are interconnected by substance-to-substance bonding, particularly are welded or soldered together.

7. Sensor assembly as claimed in one of the previous claims, further comprising: a compensation body, particularly in the form of a rod or in the form of a plate or in the form of a sleeve, which extends from the second surface of the diaphragm and wherein said body is designed to compensate forces and/or moments resulting from movements of the sensor assembly.

8. Sensor assembly as claimed in the previous claim,
- wherein at least an area of the second surface, which is adjacent to the compensation body, is concave; and/or
- wherein the diaphragm and the compensation body are interconnected by substance-to-substance bonding, particularly are welded or soldered together; and/or
- wherein the sensor tab and the compensation body are arranged such that they are flush-aligned with one another; and/or
- wherein the diaphragm is formed in such a way that the area of the second surface, which is adjacent to the compensation body, is rotationally symmetric; and/or
- wherein the compensation body and the diaphragm are positioned and aligned in relation to one another in such a way that a principal axis of inertia of the diaphragm extends, over the length, such that it is parallel to a principal axis of inertia of the compensation body, particularly coincides with it, and/or
- wherein the sensor tab, the compensation body and the diaphragm are positioned and aligned in relation to one another in such a way that a principal axis of inertia of the sensor assembly is simultaneously parallel to a principal axis of inertia of the sensor tab, to a principal axis of inertia of the compensation body and to a principal axis of inertia of the diaphragm, or that said principal axis of inertia of the sensor assembly coincides simultaneously with said principal axis of inertia of the sensor tab, and with said principal axis of inertia of the compensation body and with said principal axis of inertia of the diaphragm; and/or
- wherein the diaphragm and the compensation body are constituent parts of one and the same monolithic molded part, particularly in such a way that the sensor tab, the diaphragm and the compensation body are constituent parts of said molded part; and/or
- wherein the compensation body is made at least partially, particularly essentially or completely, from a metal, particularly a stainless steel or a nickel-based alloy; and/or
- wherein the diaphragm and the compensation body are made from a same material, particularly in such a way that the sensor tab, the diaphragm and the compensation body are made from a same material.

9. Sensor assembly as claimed in one of the previous claims, wherein the diaphragm has an outer boundary segment (111a), particularly ring-shaped and/or provided with a sealing surface.

10. Sensor assembly as claimed in the previous claim,
- wherein the outer boundary segment (111a) is designed to be connected, particularly via a substance-to-substance connection and/or in a hermetically sealed manner, to a holder (3a) serving to hold the diaphragm on a wall of a tube, particularly in such a way that the diaphragm covers an opening provided in the tube wall, particularly hermetically sealing said opening, and/or in such a way that the first surface of the diaphragm faces towards an interior channel of the tube and therefore the sensor tab projects into said interior channel, and/or
- wherein at least one sealing surface, particularly circumferential and/or in the form of a circular ring, is formed in the outer boundary segment (111a); and/or
- wherein the outer boundary segment (111a) forms a circumferential outer boundary of the convex area of the area of the first surface that is adjacent to the sensor tab.

11. Sensor designed to measure pressure fluctuations in a flowing fluid, particularly to measure pressure fluctuations in a Karman vortex street formed in the flowing fluid, said sensor comprising:
- a sensor assembly (11) as claimed in one of the previous claims;
- as well as a transducer element (12) designed to generate a sensor signal, particularly an electrical or optical signal, representing movements that vary over time - particularly at least temporarily periodic movements - of the sensor tab and/or deformations of the diaphragm that vary over time - particularly at least temporarily periodic deformations.

12. Measuring system designed to measure at least a flow parameter, particularly variable over time, particularly a flow velocity and/or a volume flow rate of a fluid flowing in a pipe, said measuring system comprising:
- a sensor (1) as claimed in Claim 11, designed to measure pressure fluctuations in the flowing fluid, particularly designed to measure pressure fluctuations in a Karman vortex street formed in the flowing fluid;
- and a measuring electronics unit (2), which is designed to receive and process the sensor signal, particularly to generate measured values (X_{M}) representing the at least one flow parameter.

13. Measuring system as claimed in the previous claim, further comprising: a tube (3) which can be inserted in the course of said pipe, said tube have an interior channel (3') which is designed to conduct the fluid flowing through the pipe.

14. Measuring system as claimed in the previous claim, wherein the sensor tab (112) has a length, measured as a minimum distance between a proximal end of the sensor tab (112) - specifically adjacent to the diaphragm to a distal end of the sensor tab (112), which is at a distance from the diaphragm (111) or the diaphragm's surface (111+) - wherein said length corresponds to less than 95 % of a caliber (DN) of the tube (3) and/or more than a half of said caliber (DN).

15. Measuring system as claimed in one of the Claims 13 to 14,
- wherein an opening (3") is formed in the wall of the tube (3), particularly having a holder (3a) that serves to hold the diaphragm on the wall,
- and wherein the sensor (1) is inserted into said opening (3") in such a way that the diaphragm covers the opening (20'), particularly seals the opening in a hermetic manner, and in such a way that the first surface of the diaphragm faces towards the interior channel (3') of the tube, and consequently the sensor tab projects into said interior channel.

16. Measuring system as claimed in the previous claim, wherein the opening (3") has a holder (3a) serving to hold the diaphragm on the wall.

17. Measuring system as claimed in the previous claim, wherein at least one sealing surface, particularly circumferential and/or in the form of a circular ring, is formed in the holder (3a).

18. Measuring system as claimed in the previous claim,
- wherein the diaphragm has an outer boundary segment (111a), particularly in the form of a circular ring, in which at least one sealing surface, particularly circumferential and/or in the form of a circular ring, is formed, and
- wherein said sealing surface and the sealing surface of the holder are designed to hermetically seal the opening, particularly by inserting at least one seal.

19. Measuring system as claimed in one of the Claims 13 to 18, further comprising: a bluff body (4) arranged in the interior channel of the tube (3), said body being designed to produce a Karman vortex street in the flowing fluid.

20. Use of a measuring system as claimed in one of the Claims 12 to 19 to measure a flow parameter - particularly a flow velocity and/or a volume flow and/or a mass flow - of a fluid, particularly a vapor, flowing through a pipe, said fluid having a temperature of more than 400 °C and/or acting on the diaphragm of the sensor with a pressure of more than 140 bar.

## Revendications

1. Module capteur pour un capteur destiné à la mesure de fluctuations de pression dans un fluide en écoulement, notamment pour la mesure de fluctuations de pression dans une allée tourbillonnaire de Karman formée dans le fluide en écoulement, lequel module capteur comprend :
- une membrane (11) en forme de cuvette, notamment au moins partiellement bombée, avec une première surface (111+) incurvée et une deuxième surface (111#) disposée à l'opposé de la première surface, laquelle deuxième surface est notamment au moins partiellement parallèle et/ou au moins partiellement non parallèle à la première surface (111+) ;
- ainsi qu'une languette de capteur (112), notamment en forme de tige ou en forme de plaque ou en forme de coin, laquelle languette s'étend en partant de la première surface de la membrane (111+) ;
**caractérisé**
**en ce que** la membrane est formée de telle sorte qu'au moins une zone - adjacente à la languette de capteur - de la première surface (111+) est convexe.

2. Module capteur selon la revendication précédente,
- pour lequel la membrane (111) est formée de telle sorte que la zone - adjacente à la languette de capteur (112) - de la première surface (111+) est asphérique ; et/ou
- pour lequel la membrane (111) est formée de telle sorte que la zone - adjacente à la languette de capteur (112) - de la première surface (111+) est symétrique par rapport à au moins un axe de symétrie imaginaire, notamment de telle sorte que ledit axe de symétrie est parallèle par rapport à un axe principal d'inertie de la languette de capteur et/ou de telle sorte que ledit axe de symétrie est perpendiculaire à un axe principal d'inertie de la languette de capteur ; et/ou
- pour lequel la membrane est formée de telle sorte que la zone - adjacente à la languette de capteur - de la première surface est symétrique par rapport à exactement deux axes de symétrie imaginaires perpendiculaires l'un à l'autre, notamment de telle sorte qu'au moins l'un des axes de symétrie est parallèle à un axe principal d'inertie de la languette de capteur et/ou de telle sorte qu'un axe principal d'inertie de la languette de capteur est perpendiculaire à l'un des axes de symétrie imaginaires et est parallèle à l'autre axe de symétrie imaginaire ; et/ou
- pour lequel la membrane est formée de telle sorte que la zone - adjacente à la languette de capteur - de la première surface est à symétrie de révolution ; et/ou
- pour lequel un segment (111b) - portant la languette de capteur (112) - de la membrane comprend une première zone formant le centre de la membrane, laquelle première zone présente une première épaisseur, et une deuxième zone adjacente à ladite première zone, notamment entourant celle-ci, laquelle deuxième zone présente une deuxième épaisseur différente de la première épaisseur, notamment de telle sorte que la première épaisseur est inférieure à la deuxième épaisseur, et/ou
- pour lequel au moins une zone - disposée à l'opposé de la zone, adjacente à la languette de capteur, de la première surface - de la deuxième surface est concave ; et/ou
- pour lequel la membrane est formée de telle sorte qu'une hauteur de membrane, mesurée en tant que distance minimale d'un centre de gravité de la première surface à une surface de projection imaginaire inscrite par un bord extérieur périphérique de la zone - adjacente à la languette de capteur - de la première surface, laquelle surface de projection est inférieure à un diamètre de membrane, mesuré en tant que diamètre maximal de ladite surface de projection, notamment de telle sorte que ledit diamètre de membrane est inférieur à un demi-axe maximal ou inférieur à un rayon de ladite surface de projection, et/ou de telle sorte qu'un rapport diamètre-hauteur de la membrane, défini en tant que rapport entre ledit diamètre de membrane et ladite hauteur de membrane, est inférieur à 30 et/ou supérieur à 2, notamment inférieur à 20 et/ou supérieur à 5, et/ou de telle sorte qu'un rapport entre ledit diamètre de membrane et une longueur de la languette de capteur (112), mesurée en tant que distance minimale entre une extrémité proximale - notamment adjacente à la membrane (111) - de la languette de capteur (112) jusqu'à une extrémité distale - notamment éloignée de la membrane (111) ou de sa surface (111+) - de la languette de capteur (112), est inférieure à 2 et/ou supérieure à 0,5 ; et/ou
- pour lequel la membrane est au moins partiellement conique.

3. Module capteur selon l'une des revendications précédentes, pour lequel la membrane est formée de telle sorte qu'au moins la zone - adjacente à la languette de capteur - de la première surface correspond à une surface d'une zone sphérique, notamment de telle sorte qu'une surface de recouvrement de ladite zone sphérique correspond à une section transversale de la languette de capteur ou correspond à ladite section transversale.

4. Module capteur selon l'une des revendications 1 à 2, pour lequel la membrane est formée de telle sorte qu'au moins la zone - adjacente à la languette de capteur - de la première surface correspond à une surface latérale d'un cône tronqué.

5. Module capteur selon l'une des revendications 1 à 2, pour lequel la membrane est formée de telle sorte que la zone - adjacente à la languette de capteur - de la première surface correspond à un segment d'une surface latérale d'un ellipsoïde.

6. Module capteur selon l'une des revendications précédentes,
- pour lequel la languette de capteur et la membrane sont positionnés et en alignement mutuel, de telle sorte qu'un axe principal d'inertie de la languette de capteur est parallèle à un axe principal d'inertie du module capteur, ou coïncide avec celui-ci ; et/ou
- pour lequel la languette de capteur et la membrane sont positionnés et en alignement mutuel, de telle sorte qu'un axe principal d'inertie de la membrane s'étend dans le prolongement et parallèlement à un axe principal d'inertie du module capteur, notamment coïncide avec celui-ci ; et/ou
- pour lequel la membrane est au moins partiellement, notamment essentiellement ou intégralement, constituée d'un métal, notamment un acier inoxydable ou un alliage à base de nickel ; et/ou
- pour lequel la languette de capteur est au moins partiellement, notamment essentiellement ou intégralement, constituée d'un métal, notamment un acier inoxydable ou un alliage à base de nickel ; et/ou
- pour lequel la membrane et la languette de capteur sont constituées d'un même matériau ; et/ou
- pour lequel la membrane et la languette de capteur sont des éléments constitutifs d'une même pièce formée monolithique, notamment moulée ou fabriquée par fusion laser 3D ; et/ou
- pour lequel la membrane et la languette de capteur sont reliées par liaison de matière, notamment brasées ou soudées ensemble.

7. Module capteur selon l'une des revendications précédentes, comprenant en outre : un corps de compensation, notamment en forme de tige ou en forme de plaque ou en forme de douille, lequel corps s'étend en partant de la deuxième surface de la membrane et lequel corps est destiné à compenser les forces et/ou les moments résultants des mouvements du module capteur.

8. Module capteur selon la revendication précédente,
- pour lequel au moins zone - adjacente au corps de compensation - de la deuxième surface est concave ; et/ou
- pour lequel la membrane et le corps de compensation sont reliés par liaison de matière, notamment soudés ou brasés ensemble ; et/ou
- pour lequel la languette de capteur et le corps de compensation sont disposés en alignement mutuel ; et/ou
- pour lequel la membrane est formée de telle sorte que la zone - adjacente au corps de compensation - de la deuxième surface est à symétrie de révolution ; et/ou
- pour lequel le corps de compensation et la membrane sont positionnés et en alignement mutuel de telle sorte qu'un axe principal d'inertie de la membrane s'étend dans le prolongement et parallèlement à un axe principal d'inertie du corps de compensation, notamment coïncide avec celui-ci, et/ou
- pour lequel la languette de capteur, le corps de compensation et la membrane sont positionnés et en alignement mutuel, de telle sorte qu'un axe principal d'inertie du module capteur est parallèle à la fois à un axe principal d'inertie du de la languette de capteur, à un axe principal d'inertie du corps de compensation et à un axe principal d'inertie de la membrane, ou ledit axe principal d'inertie du module capteur coïncide avec à la fois ledit axe principal d'inertie de la languette de capteur, audit axe principal d'inertie du corps de compensation et audit axe principal d'inertie de la membrane ; et/ou
- pour lequel la membrane et le corps de compensation constituent des éléments constitutifs d'une même pièce formée monolithique, notamment de telle sorte que la languette de capteur, la membrane et le corps de compensation sont des éléments de ladite pièce formée ; et/ou
- pour lequel le corps de compensation est au moins partiellement, notamment essentiellement ou intégralement, constitué d'un métal, notamment un acier inoxydable ou un alliage à base de nickel ; et/ou
- pour lequel la membrane et le corps de compensation sont constitués d'un même matériau, notamment de telle sorte que la languette de capteur, la membrane et le corps de compensation sont constitués d'un même matériau.

9. Module capteur selon l'une des revendications précédentes, pour lequel la membrane présente un segment de bord extérieur (111a), notamment de forme annulaire circulaire et/ou muni d'une surface d'étanchéité.

10. Module capteur selon la revendication précédente,
- pour lequel le segment de bord extérieur (111a) est conçu de telle sorte à être relié, notamment par liaison de matière et/ou de manière hermétique, avec une douille (3a) servant au maintien de la membrane sur une paroi d'un tube, notamment de telle sorte que la membrane recouvre une ouverture prévue dans la paroi du tube, notamment obture ladite membrane de façon hermétique, et/ou de telle sorte que la première surface de la membrane fait face à un canal intérieur du tube et pénètre conjointement avec la languette de capteur dans ledit canal intérieur, et/ou
- pour lequel au moins une surface d'étanchéité, notamment périphérique et/ou de forme annulaire circulaire, est formée dans le segment de bord extérieur (111a) ; et/ou
- pour lequel le segment de bord extérieur (111a) forme un bord extérieur périphérique de la zone convexe de la première surface, laquelle surface est adjacente à la languette de capteur.

11. Capteur destiné à la mesure de fluctuations de pression dans un fluide en écoulement, notamment destiné à la mesure de fluctuations de pression dans une allée tourbillonnaire de Karman formée dans le fluide en écoulement, lequel capteur comprend :
- un module capteur (11) selon l'une des revendication précédentes ;
- ainsi qu'un élément convertisseur (12) destiné à la génération d'un signal de capteur, notamment électrique ou optique, représentant les mouvements variables dans le temps - notamment au moins temporairement périodiques - de la languette de capteur et/ou les déformations variables dans le temps - notamment au moins temporairement périodiques - de la membrane.

12. Système de mesure destiné à la mesure d'au moins un paramètre d'écoulement, notamment variable dans le temps, notamment une vitesse d'écoulement et/ou un débit volumique d'un fluide s'écoulant dans une conduite, lequel système de mesure comprend :
- un capteur (1) selon la revendication 11, destiné à la mesure de fluctuations de pression dans le fluide en écoulement, notamment destiné à la mesure de fluctuations de pression dans une allée tourbillonnaire de Karman formée dans le fluide en écoulement ;
- ainsi qu'une électronique de mesure (2), laquelle est conçue de telle sorte à recevoir et à traiter le signal du capteur, notamment à générer des valeurs mesurées (X_{M}) représentant l'au moins un paramètre d'écoulement.

13. Système de mesure selon la revendication précédente, comprenant en outre : un tube (3) pouvant être inséré dans le tracé de la conduite, avec un canal intérieur (3'), lequel est destiné à guider le fluide s'écoulant dans la conduite.

14. Système de mesure selon la revendication précédente, pour lequel la languette de capteur (112) présente une longueur, mesurée en tant que distance minimale entre une extrémité proximale - notamment adjacente à la membrane - de la languette de capteur (112) jusqu'à une extrémité distale - notamment éloignée de la membrane (111) ou de sa surface (111+) - de la languette de capteur (112), laquelle longueur correspond à moins de 95 % d'un calibre (DN) du tube (3) et/ou à plus d'une moitié dudit calibre (DN).

15. Système de mesure selon l'une des revendications 13 à 14,
- pour lequel est formée, dans la paroi du tube (3), une ouverture (3"), notamment comportant une douille (3a) servant de maintien de la membrane sur la paroi,
- et pour lequel le capteur (1) est inséré dans ladite ouverture (3") de telle sorte que la membrane recouvre l'ouverture (20'), notamment l'obture de façon hermétique, et de telle sorte que la première surface de la membrane, qui fait face au canal intérieur (3') du tube pénètre, conjointement avec la languette de capteur, dans ledit canal intérieur.

16. Système de mesure selon la revendication précédente, pour lequel l'ouverture (3") comporte une douille (3a) servant au maintien de la membrane sur la paroi.

17. Système de mesure selon la revendication précédente, pour lequel est prévue, dans la douille (3a), au moins une surface d'étanchéité, notamment périphérique et/ou de type annulaire circulaire.

18. Système de mesure selon la revendication précédente,
- pour lequel la membrane présente un segment de bord extérieur (111a) de forme annulaire circulaire, segment dans lequel au moins une surface d'étanchéité, notamment périphérique ou de type annulaire circulaire, est formée, et
- pour lequel ladite surface d'étanchéité et la surface d'étanchéité de la douille sont destinées à obturer hermétiquement l'ouverture, notamment en intercalant au moins un joint d'étanchéité.

19. Système de mesure selon l'une des revendications 13 à 18, comprenant en outre : un corps de retenue (4) disposé dans le canal intérieur du tube (3), lequel corps est conçu de telle sorte à provoquer une allée tourbillonnaire de Karman dans le fluide en écoulement.

20. Utilisation d'un système de mesure selon l'une des revendications 12 à 19 destiné à la mesure d'un paramètre d'écoulement - notamment d'une vitesse d'écoulement et/ou d'un débit volumique et/ou d'un débit massique - d'un fluide, notamment une vapeur, s'écoulant dans une conduite, lequel fluide agit sur la membrane du capteur et présente une température supérieure à 400 °C et/ou une pression supérieure à 140 bar.
